# EUROPÄISCHE PATENTSCHRIFT

(11) **EP 4 589 264 B1**
(45) Veröffentlichungstag und Bekanntmachung des Hinweises auf die Patenterteilung: **07.10.2026**
(21) Anmeldenummer: 24152707.6
(22) Anmeldetag: 18.01.2024
(51) Int. Cl.: G01D 18/00, G01D 5/244

(54) **POSITIONSBESTIMMUNGSVORRICHTUNG**
POSITION DETECTING DEVICE
DISPOSITIF DE DÉTERMINATION DE POSITION

(43) Veröffentlichungstag der Anmeldung: 23.07.2025
(73) Patentinhaber: Baumer Germany GmbH & Co. KG, 78333 Stockach (DE)
(72) Erfinder: HANKE, Martin, 10319 Berlin (DE)
(74) Vertreter: Strauss, Steffen

(56) Entgegenhaltungen:
- EP-A1- 4 163 601
- US-A1- 2020 003 585

## Beschreibung

Die vorliegende Erfindung betrifft eine Positionsbestimmungsvorrichtung zum Bestimmen von Längen- und/oder Winkelpositionen eines Objekts nach dem Oberbegriff von Anspruch 1. Ferner betrifft die vorliegende Erfindung ein Korrekturverfahren nach Anspruch 13 sowie ein Kalibrierungstool nach Anspruch 15.

Die aus dem Stand der Technik bekannten Positionsbestimmungsvorrichtungen zum Bestimmen der Längen- und/oder Winkelpositionen des Objekts umfassen Sensormittel, die mit einer auf dem Objekt festgelegten Maßverkörperung zusammenwirken, um ein Positionssignal zum Darstellen der Längen- und/oder Winkelposition des Objekts zu erzeugen.

Die Maßverkörperung erstreckt sich entweder linear und verläuft somit längs einer Achse, um eine Längenposition des Objekts zu erfassen oder um eine Rotationsachse, um eine Winkelposition des um die Rotationsachse gelagerten Objekts zu erfassen.

Positionsbestimmungsvorrichtungen sind auf Basis verschiedener physikalischer Messprinzipien bekannt, insbesondere basierend auf optischer, magnetischer, induktiver und/oder kapazitiver Messung.

Bei den Positionsbestimmungsvorrichtungen mit optischen Messprinzip wird die Maßverkörperung etwa durch ein durchleuchtbares Trägermaterial mit auslesbaren Abschnitten, insbesondere von dunklen und hellen Markierungen beispielsweise in Form von Aussparungen, gebildet, die von den Sensormitteln zur Positionsbestimmung ausgelesen werden. Eine weitere bekannte Realisierungsmöglichkeit ist eine reflektive Maßverkörperung mit dunklen und hellen Markierungen.

Bei Positionsbestimmungsvorrichtungen mit magnetischen Messprinzip umfasst die Maßverkörperung Abschnitte mit unterschiedlicher Magnetisierung, insbesondere unterschiedlichen Magnetisierungsrichtungen, die von den Sensormitteln zur Positionserfassung erfasst werden.

Zudem kann die Maßverkörperung entweder eine oder mehrere Codespuren umfassen. Beispielsweise ist es bekannt, dass eine erste Codespur mit einer groben Positionsinformation in der Maßverkörperung längs ihrer Gesamterstreckung vorgesehen ist. Diese Positionsinformation wird auch als absolute Position bezeichnet, weil sie bereits beim Einschalten die Positionsinformation in Bezug zur Gesamterstreckung bereitstellt. Zusätzlich umfasst die Maßverkörperung eine zweite Codespur mit höher aufgelöster Positionsinformation, die sich entlang der Maßverkörperung periodisch für alle Abschnitte wiederholt. Die fein aufgelöste Positionsinformation wird auch als Feinposition oder inkrementelle Position bezeichnet. Das Positionssignal wird dann durch eine Verknüpfung der absoluten mit der inkrementellen Position gebildet.

Aus dem Stand der Technik ist eine Positionsbestimmungsvorrichtung mit einer magnetischen Maßverkörperung beispielsweise aus der EP 4 163 601 A1 der Anmelderin bekannt. Ferner ist aus der US 2020/003585 A1 eine Positionsbestimmungsvorrichtung mit einer Maßverkörperung bekannt, die eine erste und eine zweite Codespur umfasst.

In der Praxis ist die Inbetriebnahme gattungsbildender Positionsbestimmungsvorrichtungen aufwändig, da die Relativposition der Maßverkörperung einerseits und die Sensormittel andererseits innerhalb bestimmter Toleranzgrenzen liegen muss. Zudem wirkt sich auch ein Verschwenken der Sensormittel relativ zum Maßband negativ auf die Positionsbestimmung aus, weshalb auch hier Toleranzgrenzen bei der Montage eingehalten werden müssen.

Im besonderen Maße gilt dies für lagerlose Drehgeber, bei denen die Maßverkörperung auf eine bereits bestehende Welle montiert wird und die Sensormittel hierzu relativ beabstandet positioniert werden müssen.

Allerdings kann auch eine Asymmetrie in Relativbewegung zwischen Objekt und Sensormitteln vorliegen, die beispielsweise durch mechanische Toleranzen im Bereich der Maßverkörperung oder einen Rundlauffehler der Welle verursacht wird. Bei einem Rundlauffehler entspricht die Rotationsachse des Maßverkörperung nach der Montage am Objekt nicht der beim Herstellen der Codespur angenommenen Referenzachse der Maßverkörperung. Zum Kompensieren des Rundlauffehlers ist es bisher bekannt, die Codespur hinsichtlich der eigentlichen Rotationsachse des Objekts durch einen neuen magnetischen Schreibvorgang der Maßverkörperung zu korrigieren.

Ferner ist es weit verbreitet, dass nach dem Koppeln der Maßverkörperung mit dem Objekt und dem Installieren der Sensormittel ein Abgleich mittels eines Referenzgebers erfolgt, um interne Korrekturwerte zu hinterlegen. Dies ist, insbesondere für lagerlose Systeme, sehr aufwändig, da eine solche Kalibrierung direkt beim Kunden durchgeführt werden muss. Ferner ist hierfür eine Referenzmarkierung oder eine Maßverkörperung mit einer Codespur mit absoluter Position, beispielsweise eine Absolutspur, erforderlich, da die internen Korrekturwerte jeweils bestimmten Punkten oder Bereichen der Maßverkörperung zugeordnet sind.

Auch bei der Fertigung bekannter gelagerter Positionsbestimmungsvorrichtung ist es üblich, eine Kalibrierung mittels eines Kalibrierungs- und/oder Referenzgebers durchzuführen. Hierbei werden individuelle Kalibrierungsdaten erzeugt, die für den ordnungsgemäßen Betrieb der jeweiligen Positionsbestimmungsvorrichtung erforderlich sind. Allerdings ist das Erzeugen der individuellen Kalibrierungsdaten zeitaufwendig, wobei zusätzlich die Maßverkörperung eine Referenzmarkierung oder eine Absolutspur umfasst.

Unabhängig hiervon ist es auch bekannt, einen Rundlauffehler über das Auswerten mehrerer Sensormittel zum jeweiligen Erzeugen eines Positionssignals zu erkennen, die umfangseitig verteilt und meist zueinander gegenüberliegend zur drehenden Welle positioniert werden müssen. Von Nachteil ist hierbei der große Hardwareaufwand für die wenigstens zwei Sensormittel. Zudem wird zusätzliche Auswertelektronik benötigt, die auch entsprechend mit den wenigstens zwei Sensormitteln signaltechnisch verbunden werden muss. Neben deutlich höheren Kosten führt dies auch zu einer größeren Ausfallsrate aufgrund der zusätzlichen Komponenten. Ferner besteht ein Montageaufwand zum Festlegen der zweiten Sensormittel, wobei sich bestimmte Systeme aufgrund geringer Platzverhältnisse teilweise gar nicht entsprechend erweitern lassen.

Der vorliegenden Erfindung liegt die Aufgabe zugrunde, die aus dem Stand der Technik bekannten Nachteile zu überwinden. Insbesondere ist es Aufgabe der vorliegenden Erfindung eine Positionsbestimmungsvorrichtung anzugeben, die zum Erkennen und Kompensieren von Störgrößen, wie beispielsweise einem Rundlauffehler, ausgebildet ist, um eine präzise Positionsbestimmung entlang des Verstellweges des Objekts zu ermöglichen. Ferner ist es insbesondere die Aufgabe der vorliegenden Erfindung, ein entsprechendes Korrekturverfahren sowie ein Kalibrierungstool anzugeben.

Die Aufgabe wird durch eine erfindungsgemäße Positionsbestimmungsvorrichtung gemäß Anspruch 1 gelöst. Ferner wird die Aufgabe auch durch ein erfindungsgemäßes Verfahren nach Anspruch 13 und ein erfindungsgemäßes Kalibrierungstool nach Anspruch 15 gelöst.

Die erfindungsgemäße Positionsbestimmungsvorrichtung ist zum Bestimmen von Längenund/oder Winkelpositionen eines Objekts ausgebildet.

Die erfindungsgemäße Positionsbestimmungsvorrichtung umfasst eine Maßverkörperung, die an dem Objekt festgelegt werden kann und eine Vielzahl von Abschnitten zum Ausbilden einer Codespur aufweist. Die Vielzahl der Abschnitte sind entlang der Codespur zueinander benachbart angeordnet, wobei jeder Abschnitt eine definierte und/oder vorbestimmte und insbesondere einheitliche Abschnittslänge entlang der Codespur aufweist.

Die erfindungsgemäße Positionsbestimmungsvorrichtung umfasst ferner Sensormittel, die relativ zu dem Objekt festgelegt sind und zum Auslesen der Codespur eingerichtet sind und/oder zum Erzeugen eines Positionssignals ausgebildet sind. Die Sensormittel umfassen eine erste Sensoreinheit zum Erzeugen eines ersten Spurteilsignals und eine zweite Sensoreinheit zum Erzeugen eines zweiten Spurteilsignals, welche gemeinsam eine Quadranteninformation bereitstellen. Durch die Quadranteninformation kann bei einer Relativbewegung der Sensormittel entlang der Maßverkörperung insbesondere die Richtung der Relativbewegung bestimmt und unterschieden werden, um somit das Positionssignal zu bestimmen. Anders ausgedrückt, ein Positionssignal des Objekts kann nur durch das Auswerten des ersten und des zweiten Spurteilsignals gewonnen werden.

Erfindungsgemäß ist die erste Sensoreinheit von der zweiten Sensoreinheit entlang der Codespur um eine Sensordistanz so beabstandet, dass das erste Spurteilsignal und das zweite Spurteilsignal bei einer Positionsänderung des Objekts und somit einer Relativbewegung zwischen der Maßverkörperung und den Sensormitteln eine durch die Codespur definierte, von der Abschnittslänge abhängige Periodenlänge und eine von Sensordistanz und Abschnittslänge abhängigen sensorbasierten Phasendifferenz, insbesondere in Höhe von 90°, aufweisen.

Die erfindungsgemäße Positionsbestimmungsvorrichtung umfasst zudem Positionsbestimmungsmittel, die so ausgebildet sind, dass aus dem ersten und dem zweiten Spurteilsignal ein durch die Codespur definiertes Positionssignal zur Abbildung der Position und/oder Positionsänderung des Objekts erzeugbar ist.

Die erfindungsgemäße Positionsbestimmungsvorrichtung umfasst weiterhin erfindungsgemäße Periodendifferenzvergleichsmittel, die ein Periodenlängendifferenzsignal berechnen und die so ausgebildet sind, dass aus dem ersten und dem zweiten Spurteilsignal ein Phasendifferenzsignal bestimmbar ist. Ferner sind diese Periodendifferenzvergleichsmittel derart ausgebildet, dass aus dem Phasendifferenzsignal das Periodenlängendifferenzsignal bestimmbar ist.

Es wird darauf hingewiesen, dass das Phasendifferenzsignal zeitbezogen und/oder positionsbezogen und somit zeitgleich und/oder über denselben Zeitraum und/oder positionsgleich und/oder über denselben Positionsbereich bestimmt wird. Mit anderen Worten handelt es sich um einen aktuellen Unterschied der Phase des ersten Spurteilsignals und der Phase des zweiten Spurteilsignals in Bezug auf die Zeit und/oder die Position. Es kommt somit nicht zu einem Vergleich zwischen dem ersten Spurteilsignals bei einem Zeit- und/oder Positionsbereich und dem zweiten Spurteilsignal bei einem anderen Zeit- und/oder Positionsbereich.

Die erfindungsgemäße Positionsbestimmungsvorrichtung umfasst schließlich noch erfindungsgemäße Positionskorrekturmittel, die so ausgebildet sind, dass ein Korrektursignal in Abhängigkeit des Periodenlängendifferenzsignals bestimmbar ist, um das Positionssignal in Abhängigkeit des Korrektursignals in ein korrigiertes Positionssignal zu überführen.

Die Sensordistanz entspricht einer räumlichen Ausdehnung der Sensormittel und/oder der räumlichen Distanz der ersten Sensoreinheit von der zweiten Sensoreinheit. Anders ausgedrückt, die Sensordistanz entspricht der bauartbedingten Beabstandung der ersten Sensoreinheit zur zweiten Sensoreinheit. Das erste Spurteilsignal und das zweite Spurteilsignal weisen somit eine Phasenverschiebung auf, die im Wesentlichen von der Sensordistanz und der Abschnittslänge bestimmt wird.

Das erste und das zweite Spurteilsignal repräsentieren insbesondere eine inkrementelle Position. Das erste und das zweite Spurteilsignals sind periodische Signale, die um einen definierten Winkel, insbesondere 90°, zueinander phasenverschoben sind. Diese Phasenverschiebung wird im Wesentlichen von Sensordistanz der Sensormittel und Abschnittslänge der Abschnitte bestimmt.

Die beiden Spurteilsignale sind bevorzugt jeweils als ein Rechtecksignal oder als ein sinusförmiges Signal ausgebildet. Ein einzelnes Spurteilsignal liefert keine Quadranteninformation. Anders ausgedrückt, zum Bestimmen der Rotations- und/oder Bewegungsrichtung muss sowohl das erste als auch das zweite Spurteilsignal, insbesondere von den Positionsbestimmungsmitteln, ausgewertet werden. Somit ist es zwingend erforderlich, dass für das Positionssignal sowohl das erste als auch das zweite Spurteilsignal ausgewertet werden. Somit ist es bevorzugt, wenn die Sensordistanz einem Viertel der Abschnittslänge, weiterhin bevorzugt als einem Viertel der Abschnittslänge addiert mit einem Vielfachen von Eins und ferner bevorzugt einem Achtel der Abschnittslänge entspricht.

Die Maßverkörperung umfasst eine festgelegte Anzahl von Abschnitten, die längs der Maßverkörperung angeordnet sind. Die Abschnitte erstrecken sich entlang der Maßverkörperung, um die Codespur auszubilden.

Bevorzugt umfasst jeder Abschnitt einen N-Pol sowie einen S-Pol. Weiterhin bevorzugt umfasst jeder Abschnitt abwechselnd einen einzelnen N-Pol oder einen einzelnen S-Pol. Besonders bevorzugt sind die Vielzahl der Abschnitte der Maßverkörperung durch eine festgelegte Magnetisierung ausgebildet, die von den Sensormitteln erfassbar ist. Alternativ können die Vielzahl der Abschnitte auch durch eine optisch erfassbare Codierung ausgebildet sein, wobei die Sensormittel dann so ausgebildet sind, dass das erste und das zweite Spurteilsignal erzeugt werden kann.

Die Maßverkörperung und/oder die Codespur erstreckt sich entweder linear entlang und/oder längs einer Erstreckungsachse oder ist kreis- oder ringförmig ausgebildet. Somit codiert ein Abschnitt der Vielzahl der Abschnitte entweder eine lineare Wegstrecke oder einen Winkelbereich.

Die Sensormittel sind so ausgebildet, dass die Vielzahl der Abschnitte detektierbar sind und im jeweiligen Spurteilsignal durch eine Vielzahl von Signalperioden abgebildet werden. Die Signalperiode entspricht der Länge eines Abschnitts, was im Rahmen der vorliegenden Erfindung als Abschnittslänge bezeichnet wird. Die Sensormittel und/oder die erste und die zweite Sensoreinheit erzeugen somit zwei Spurteilsignale, aus denen sich das Positionssignal, insbesondere über eine atan2-Funktion, bestimmen lässt.

Diese Abschnittslänge kann ein lineares Wegstück bei Positionsbestimmungsvorrichtungen in Form von Lineargebern mit einer sich entlang einer Ache erstreckenden linearen Maßverkörperung sein oder auch ein Winkelabschnitt, insbesondere die Länge des zum Kreissektor zugehörenden Kreisbogens oder die Länge eines zum Kreisringsektor zugehörenden Kreisbogens, bei Positionsbestimmungsvorrichtungen in Form von Drehgebern oder Encodern oder Winkelmessern sein.

Es wird darauf hingewiesen, dass eine Abschnittslänge als Längenabschnitt in mm oder als Winkelabschnitt in Grad, insbesondere eine Kreisbogenlänge, weitgehend unabhängig vom Radius, bevorzugt in Grad, angegeben werden kann und damit auch die Periodenlängen der zwei Spurteilsignale als einen vom Radius unabhängigen Winkelabschnitt, bevorzugt in Grad, angegeben werden können.

Weiterhin wird darauf hingewiesen, dass beim Verrechnen der Sensordistanz mit der Abschnittslänge die Einheit der Sensordistanz und die Einheit der Abschnittslänge beachtet werden. Somit kann das Verhältnis der Sensordistanz zur Abschnittslänge sowie die davon abhängige Phasenverschiebung der Spurteilsignale zueinander durchaus mit dem Radius variieren.

Im Rahmen der vorliegenden Erfindung wurde im Ergebnis somit erkannt, dass die Phasenverschiebung zwischen dem ersten Spurteilsignal und dem zweiten Spurteilsignal, die jeweils die Vielzahl der Abschnitte der Maßverkörperung abbilden, zur Abschätzung der Abschnittslänge der jeweiligen Abschnitte der Maßverkörperung genutzt werden können. Erfindungsgemäß vorteilhaft lassen sich somit Unregelmäßigkeiten in der Maßverkörperung, die aufgrund unterschiedlichster Ursachen entstehen können, erkennen und das Positionssignal entsprechend korrigieren.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Weiterbildend ist vorgesehen, dass die Periodendifferenzvergleichsmittel derart ausgebildet sind, dass eine Abweichung zwischen dem Phasendifferenzsignal und einem Referenzwert der sensorbasierten Phasendifferenz bestimmbar ist und dass aus dieser Abweichung in Abhängigkeit der Sensordistanz das Periodenlängendifferenzsignal ermittelbar ist.

Die Abhängigkeit der Sensordistanz wird bevorzugt durch die Multiplikation mit einem Faktor k umgesetzt. Dieser Faktor k wird besonders bevorzugt als Verhältnis der Abschnittslänge zu der Sensordistanz, bei dem die Phasenverschiebung der zwei Spurteilsignale zueinander 90° ergibt, gewählt. Anders ausgedrückt, dieser Faktor k ist bauartbedingt und abhängig von den Sensormitteln und/oder der Sensordistanz und einer idealen Abschnittslänge.

Bevorzugt sind die Periodendifferenzvergleichsmittel zum Bestimmen des Phasendifferenzsignals so ausgebildet, dass aus den beiden Spurteilsignalen zunächst eine diskrete Fouriertransformation (DFT) stückweise, insbesondere über die Länge einer Periode der Spurteilsignale, durchgeführt wird. Ein komplexer Wert der DFT beschreibt somit die Signalfrequenz der beiden Spurteilsignale. Aus diesem Wert sind Amplitude und Phase der Spurteilsignale bestimmbar. Die Differenz der Phase der jeweiligen Spurteilsignale ist ein Wert des Phasendifferenzsignals der insbesondere dieser Periode des Spurteilsignals zugeordnet ist. Da die Spurteilsignale zunächst häufig zeitdiskret vorliegen und damit die Anzahl der Werte je Periode von der Relativbewegung zwischen der Maßverkörperung und den Sensormitteln abhängt, ist es besonders bevorzugt, die Spurteilsignale so umzutasten, dass die Einzelwerte der Spurteilsignale äquidistant zum Positionssignal vorliegen.

Ferner ist es in diesem Zusammenhang besonders bevorzugt, das Positionssignal beispielsweise in acht diskrete Einzelwerte je Signalperiode der Spurteilsignale zu unterteilen. Diesen Einzelwerten wird dann jeweils ein passender Wert der jeweiligen Spurteilsignale zugeordnet. Diese Zuordnung kann insbesondere auch durch eine übliche Interpolation der Einzelwerte der jeweiligen Spursignale berechnet werden. Vorteilhaft ist, dass damit die Anzahl der diskreten Werte der Spurteilsignal je Periode weitgehend unabhängig von der Art der Relativbewegung, insbesondere unabhängig davon, ob die Relativbewegung eine beschleunigte Bewegung darstellt, zwischen der Maßverkörperung und den Sensormitteln sind.

In vorteilhafter Weise wird es somit ermöglicht, mit genau einem komplexen Wert der DFT die Amplitude und die Phase der Grundfrequenz und/oder Signalperiode der jeweiligen Spurteilsignale zu ermitteln.

Die Anzahl der diskreten Einzelwerte der jeweiligen Spurteilsignale repräsentieren einen Ausschnitt der im Folgenden als Fenster bezeichnet wird. Der Anfang dieses Fensters kann beliebig festgelegt werden. Vorteilhaft können somit einer Periode der Spurteilsignale auch mehrere Phasendifferenzwerte zugeordnet werden. Weiterhin ist es in diesem Zusammenhang insbesondere weiterbildend möglich, anstatt jeder Periode der Spurteilsignale einen oder mehrere Phasendifferenzwerte zuzuordnen, einen Phasendifferenzwert mehreren aufeinanderfolgenden Perioden zuzuordnen.

Alternativ wird das Positionssignal beispielsweise in vier diskrete Einzelwerte je Signalperiode der Spurteilsignale unterteilt, die bezogen auf die Signalperiodenlänge von 2*π* einen gleichmäßigen Abstand von $\frac{π}{2}$ aufweisen und mit der Phase $\frac{π}{4}$ beginnen. Es ergeben sich somit insbesondere die vier diskreten Einzelwerte $\frac{π}{4} , \frac{3 π}{4} , \frac{5 π}{4} , \frac{7 π}{4}$ je Signalperiode der Spurteilsignale, hier als *ρ* bezeichnet. Diesen Einzelwerten wird dann jeweils ein passender Wert der jeweiligen Spurteilsignale zugeordnet, wobei bei diesen Zuordnungen bevorzugt übliche Interpolationsmethoden verwendet werden. Weiterhin wird jeweils eine Länge *r*(*ρ*) aus den zugeordneten ersten Spurteilsignal A und den zugeordneten zweiten Spurteilsignal B über die Gleichung $r \left(ρ\right) = \sqrt{A {\left(ρ\right)}^{2} + B {\left(ρ\right)}^{2}}$ berechnet.

Über die folgenden Gleichungen lässt sich dann jeweils ein Einzelwert des Phasendifferenzwerts, hier insbesondere in der Einheit Grad, bestimmen: $Δ {φ}_{a} = atan 2 \left(r\left(\frac{3 π}{4}\right)-r\left(\frac{π}{4}\right),r\left(\frac{3 π}{4}\right)+r\left(\frac{π}{4}\right)\right) ⋅ \frac{180 °}{π} + 90 °$ und/oder $Δ {φ}_{b} = atan 2 \left(r\left(\frac{7 π}{4}\right)-r\left(\frac{5 π}{4}\right),r\left(\frac{7 π}{4}\right)+r\left(\frac{5 π}{4}\right)\right) ⋅ \frac{180 °}{π} + 90 ° .$

Besonders bevorzugt ist es in diesem Zusammenhang, wenn als Phasendifferenzwert ein Mittelwert $Δ φ = \frac{Δ {φ}_{a} + Δ {φ}_{b}}{2}$ verwendet wird.

Bei einer bevorzugten Ausführungsform sind die Positionsbestimmungsmittel zum Bestimmen eines erweiterten Positionssignals ausgebildet, derart, dass das Positionssignal um eine Positionsinformation, insbesondere um einen Zählwert und/oder einer Zuordnungsvorschrift, erweiterbar ist, um dem Positionssignal, insbesondere einem Einzelwert des Positionssignals, den jeweilige Abschnitt der Vielzahl der Abschnitte der Maßverkörperung zuzuordnen und als das erweiterte Positionssignal bereitzustellen.

In der vorliegenden Erfindung bezeichnet das erweiterte Positionssignal somit das Positionssignal, das um eine Information ergänzt und/oder erweitert wurde. Bei dieser Information handelt es sich um die Angabe des jeweiligen Abschnitts, auf das sich das Positionssignal bezieht. Das erweiterte Positionssignal liefert somit neben der Positionsinformation des Objekts zusätzlich noch die Information zum jeweiligen Abschnitt der Vielzahl der Abschnitte der Maßverkörperung. Durch das erweiterte Positionssignal kann somit dem Positionssignal, insbesondere jedem Einzelwert des Positionssignals, nachträglich der entsprechende Abschnitt zugeordnet werden. Vorteilhafterweise lassen sich somit positions- und/oder Abschnittsabhängige Unregelmäßigkeiten im Positionssignal einer Position des Objekts und/oder einem Objekt zuordnen.

Anders ausgedrückt, das reine Positionssignal weist insbesondere eine Periodizität mit den Spurteilsignalen auf. Das erweiterte Positionssignal umfasst dagegen eine Periodizität entsprechend der Maßverkörperung.

Bevorzugt umfasst das Positionssignal mehrere Einzelwerte, wobei eine Abfolge mehrerer Einzelwerte für den jeweiligen Abschnitt erzeugt werden. Beispielsweise werden bevorzugt vier, weiterhin bevorzugt 16 besonders bevorzugt 32 Einzelwerte pro Abschnitt erzeugt, wobei aufgrund des zeitlichen Taktgebers der Sensormittel keine feste Beziehung zwischen der Anzahl der Einzelwerte für das jeweilige Abschnitt der Vielzahl der Abschnitte vorliegen muss.

Es wird darauf hingewiesen, dass die Sensormittel und/oder die erste und die zweite Sensoreinheit zumindest anfangs analoge Spurteilsignale erzeugen. Bevorzugt werden die beiden Spurteilsignale dann über einen A/D-Wandler in digitale Spurteilsignale umgesetzt, was dann in bekannter Weise eine Wertdiskretisierung und eine Zeitdiskretisierung umfasst. Vorteilhaft kann somit die folgende erfindungsgemäße Signalverarbeitung in einem µController oder FPGA oder einer ähnlichen Recheneinheit implementiert sein.

Eine bevorzugte Ausführungsform umfasst eine Zusatzsensoreinheit zum Erfassen einer Positionsinformation zum Bestimmen eines erweiterten Positionssignals, wobei die Zusatzsensoreinheit zum Zusammenwirken mit den Positionsbestimmungsmitteln und/oder der Maßverkörperung eingerichtet ist und so ausgebildet ist, dass dem Positionssignal, insbesondere einem Einzelwert des Positionssignals, der jeweilige Abschnitt der Vielzahl der Abschnitte zuordenbar und als das erweiterte Positionssignal bereitstellbar ist.

Bevorzugt ist die Zusatzsensoreinheit als ein Distanzsensor ausgebildet, um ein Distanzsignal zu erstellen, das es erlaubt, dem Positionssignal, insbesondere einem oder einer Gruppe von Einzelwerten des Positionssignals, den entsprechenden Abschnitt der Vielzahl der Abschnitte zuzuordnen, um somit das erweiterte Positionssignal, insbesondere für einen Lineargeber, zu erzeugen.

Bevorzugt ist die Zusatzsensoreinheit auch zum Auslesen einer Absolutspur der Maßverkörperung ausgebildet, um somit die absolute Position zu bestimmen. Besonders bevorzugt kann dies eine Pseudo-Random-Codierung umfassen. Alternativ ist auch denkbar, dass eine erste Codespur zusammen mit einer weiteren Codespur eine Noniuscodierung ausbildet, die dann von der Zusatzsensoreinheit ausgelesen wird. Ganz besonders bevorzugt, insbesondere im Zusammenhang des optischen Messprinzips kann auch eine Gray-Codierung vorgesehen sein. Im Ergebnis kann die Zusatzsensoreinheit somit durch zusätzliche Sensormittel sowie eine zusätzliche Absolutcodespur ausgebildet sein.

Eine bevorzugte Ausführungsform sieht vor, dass die Periodendifferenzvergleichsmittel so ausgebildet sind, dass das Periodenlängendifferenzsignal und/oder das Phasendifferenzsignal für jeden Abschnitt der Vielzahl der Abschnitte gesondert und/oder Abschnittsbezogen berechenbar ist und somit dem erweiterten Positionssignal, insbesondere mehreren Einzelwerten des Positionssignals, in Abhängigkeit des Abschnitts zuordenbar ist.

Anders ausgedrückt, neben dem erweiterten Positionssignal ist es bevorzugt vorgesehen, dass auch ein erweitertes Periodenlängendifferenzsignal und/oder erweitertes Phasendifferenzsignal erzeugbar ist. Bevorzugt wird das technisch so realisiert, dass die Periodendifferenzvergleichsmittel zum Bestimmen des Phasendifferenzsignal auf das erweiterte Positionssignal zurückgreifen, um somit das erweiterte Phasendifferenzsignal zu bestimmen. In der vorliegenden Erfindung bezeichnet das erweiterte Phasendifferenzsignal das Phasendifferenzsignal, das zusätzlich noch Positionsinformation und/oder Abschnittsinformation umfasst. Ferner bezeichnet das erweiterte Periodenlängendifferenzsignal das Periodenlängendifferenzsignal, das zusätzlich eine Positions- und/oder Abschnittsinformation umfasst und/oder dem zusätzlich eine Positionsund/oder Abschnittsinformation zugeordnet ist.

In einer Weiterbildung der vorliegenden Erfindung umfassen die Periodendifferenzvergleichsmittel Rechenmittel zum Bestimmen des Referenzwerts, wobei die Rechenmittel so ausgebildet sind, dass der Referenzwert durch einen Mittelwert, bevorzugt einen arithmetischen Mittelwert, des Phasendifferenzsignals, insbesondere über alle Abschnitte der Vielzahl der Abschnitte der Codespur, bestimmbar ist.

Ferner ist weiterbildend vorgesehen, dass der Referenzwert unter Einbeziehung einer Referenzlänge L ermittelbar ist, wobei die Referenzlänge L insbesondere mittels einer zusätzlichen Messvorrichtung, bevorzugt einem Distanzsensor, bestimmbar ist, wobei die Referenzlänge die Gesamterstreckung der Maßverkörperung angibt.

Es wird darauf hingewiesen, dass es bei einer linearen Maßverkörperung einerseits bevorzugt vorgesehen sein kann, dass ein sensor- und/oder anbauspezifischer Phasenfehler, der beispielsweise durch die Verkippung der Sensormittel relativ zur Maßverkörperung verursacht werden kann, als unwesentlich eingestuft und somit ignoriert werden kann. Somit wird hier als Referenzwert REF beispielsweise ein Idealwert von 90° verwendet.

Andererseits kann es bevorzugt vorgesehen sein, dass die Referenzlänge L über die zusätzliche Messvorrichtung, bevorzugt einen Distanzsensor, bestimmt wird. Der Referenzwert REF kann dann mit Hilfe des arithmetischen Mittelwertes des Phasendifferenzsignals Δ*φ* über alle Abschnitte für den Messbereich der Referenzlänge minus der Referenzlänge L geteilt durch die Anzahl der Abschnitte für den Messbereich der Referenzlänge geteilt durch die Abschnittslänge multipliziert mit 90° ermittelt werden.

Der Referenzwert REF kann so einerseits als Abgleichwert bei der Inbetriebnahme und andererseits mit den Rechenmitteln und der zusätzlichen Messvorrichtung im Betrieb fortlaufend ermittelt werden.

Weiterbildend ist vorgesehen, dass die Positionskorrekturmittel Integrationsmittel zum Bestimmen des Korrektursignals umfassen, die so ausgebildet sind, dass das Periodenlängendifferenzsignal durch eine diskrete Integration, bevorzugt durch eine kumulierte Summe, insbesondere über alle Abschnitte der Vielzahl der Abschnitte der Codespur, in das Korrektursignal überführbar ist.

Zudem ist es bei einer Weiterbildung vorgesehen, dass die erste Sensoreinheit und die zweite Sensoreinheit in einer gemeinsamen Gehäuseeinheit angeordnet sind, wobei die Gehäuseeinheit bevorzugt die Sensordistanz definiert und/oder dass die erste und die zweite Sensoreinheit weiter bevorzugt gemeinsame Hilfsversorgungsmittel, insbesondere eine Referenzspannungsquelle und/oder eine Auswerteeinheit, umfassen.

Weiterbildend ist vorgesehen, dass die Sensormittel zum axialen Zusammenwirken mit der Maßverkörperung ausgebildet sind, wobei die Maßverkörperung kreisflächenförmig und die Vielzahl der Abschnitte als Kreissektoren ausgebildet sind. Alternativ kann beim axialen Zusammenwirken die Maßverkörperung auch kreisringförmig und die jeweiligen Abschnitte der Vielzahl der Abschnitte jeweils als ein Kreisringsektor, die insbesondere gleichmäßig verteilt, ausgebildet sein.

Weiterbildend ist zudem geplant, dass die Sensormittel zum radialen Zusammenwirken mit der Maßverkörperung ausgebildet sind, wobei die Maßverkörperung in einer Mantelfläche eines Zylinders oder Hohlzylinders und die Vielzahl der Abschnitte, insbesondere gleichmäßig verteilt, umfangsseitig und/oder entlang des Umfangs der Mantelfläche angeordnet sind.

Weiterbildend ist zudem geplant, dass die Sensormittel zum linearen Zusammenwirken mit der Maßverkörperung ausgebildet sind, wobei die Maßverkörperung linear und/oder entlang eines linearen Weges ausgebildet ist und die Vielzahl der Abschnitte, insbesondere gleichmäßig verteilt, entlang dieses Weges angeordnet sind.

Bei einem bevorzugten Ausführungsbeispiel umfassen die erste Sensoreinheit und die zweite Sensoreinheit jeweils wenigstens einen magnetfeldsensitiven Sensor und/oder wenigstens einen induktiven Sensor und/oder wenigstens einen kapazitiven Sensor und/oder wenigstens einen optischen Sensor, wobei es besonders bevorzugt ist, wenn bei einem optischen Sensoren die Sensordistanz durch eine Blende mit wenigstens zwei Öffnungen definiert und/oder gebildet ist.

Weiterbildend ist es, insbesondere bei Sensormitteln zum radialen Zusammenwirken mit der Maßverkörperung besonders bevorzugt, wenn die Positionsbestimmungsvorrichtung Servicemittel aufweist, die so ausgebildet sind, dass aus dem Phasendifferenzsignal oder dem Periodenlängendifferenzsignal der Abstand zwischen den Sensormitteln und der Maßverkörperung mittelbar und/oder unmittelbar bestimmt und an eine Serviceperson ausgegeben wird kann. Weiter bevorzugt ist es in diesem Zusammenhang, wenn die Servicemittel zum Erzeugen eines den aktiven Betrieb der Positionsbestimmungsvorrichtung freigebenden Statussignals ausgebildet sind, derart, dass das Statussignal nur dann erzeugt wird, wenn der ermittelte Abstand innerhalb vordefinierter Grenzbereiche liegt.

Bei der unmittelbaren Bestimmung des Abstands wird der Abstand von den Servicemitteln unmittelbar bestimmt. Im Rahmen der mittelbaren Bestimmung erzeugen die Servicemittel dagegen wesentliche Informationen und/oder Daten, die zur Bestimmung des Abstands genutzt werden können.

Vorteilhaft ist somit eine aktive Rückmeldung von der Positionsbestimmungsvorrichtung erzeugbar, die, beispielsweise einem Installateur und/oder einem Käufer der Positionsbestimmungsvorrichtung, darüber informiert, ob die Montage und/oder die Relativpositionierung von Sensormitteln und Maßband innerhalb der zulässigen Grenzen, insbesondere Abstandgrenzen liegt. Vorteilhaft kann somit eine aufwändige Kalibrierung der Positionsbestimmungsvorrichtung durch Hilfskomponenten vollständig entfallen.

Bevorzugt umfasst das Statussignal unmittelbar oder mittelbar eine Information, wie etwa: "Montage gut" oder "Montage schlecht", wobei der aktive Betrieb der Positionsbestimmungsvorrichtung nur bei der Ausgabe des Statussignals "Montage gut" möglich ist.

Besonders bevorzugt umfasst das Statussignal unmittelbar oder mittelbar die Information "gut", "schlecht" oder "Warnung", wobei die Ausgabe der Information durch festgelegte Grenzwertbereiche des Abstands abhängt, Insbesondere "gut" bei 0 mm bis 1,2 mm; "Warnung" ab 1,2 bis 1,6 mm und "schlecht" ab 1,6 mm.

Beim axialen Zusammenwirken der Sensormitteln mit der Maßverkörperung kann der Abstand zwischen der Maßverkörperung und den Sensormitteln insbesondere wie folgt bestimmt werden: Bauartbedingt ist bekannt, wie lang die ideale Abschnittslänge bei einem Periodenlängendifferenzsignal von 0 ist. Das Periodenlängendifferenzsignal kann die Abweichung von dieser Abschnittslänge angeben. Beispielsweise lässt sich mit (|Δ*φ*| - 90°) * *k* das Periodenlängendifferenzsignal darstellen und/oder berechnen und beispielsweise kann die Abschnittslänge al mit $al = al _ ideal ∗ \left(\frac{\left|Δφ\right| - 90 °}{360 °}∗k+1\right)$ berechnet werden, wobei al_ideal die ideale Abschnittlänge darstellt, bei der die zwei Spurteilsignale eine Phasenverschiebung von 90° aufweisen.

Es lässt sich also beispielsweise der mittlere Umfang durch die Anzahl sämtlicher Abschnitte mal der idealen Abschnittlänge addiert mit der mittleren Periodenlängendifferenz über alle Abschnitte mal der idealen Abschnittslänge angeben.

Entsprechend sind dann auch der rechnerische minimale und maximale Umfang gegeben. Aus einem so ermittelten Umfang kann auf die radiale Position der Sensormittel geschlossen werden. Der Abstand der Sensormittel zur Maßverkörperung ist dann durch die Differenz der radialen Position der Sensormittel, die sich aus dem berechneten Umfang durch Division durch 2Pi ermitteln lässt, zur bauartbedingten radialen Position der Maßverkörperung gegeben.

Eine bevorzugte Weiterbildung verwendet den ermittelten Abstand der Sensormittel zur Maßverkörperung, um daraus eine Exzentrizität zu bestimmen. Bevorzugt kann dies durch eine DFT der Abstandswerte erfolgen, die als Ergebnis komplexe Werte erzeugt. Damit kann eine Amplitude *Ae* und eine Phase *Pe* des sinusförmigen Signals mit der Periodenlänge, die der Länge der Maßverkörperung entspricht, insbesondere der Länge des Umfangs, bestimmt werden. Aus dieser Amplitude und dem mittleren Durchmesser, der aus dem mittleren Umfang ermittelt werden kann, kann mit der bekannten Gleichung $Ex = 412 ∗ \frac{Ae}{D}$, wobei *Ae* in µm skaliert ist, *D* der mittlere Durchmesser in mm skaliert ist und *Ex* die Amplitude des resultierenden Winkelfehlers in Winkelsekunden darstellt. Weiterhin kann daraus das Korrektursignal mit $e _ N \left(x_N\right) = \frac{Ex ∗ π}{3600 ∗ 180} ∗ cos \left(x_N+Pe+\frac{π}{2}\right)$ gebildet werden, wobei das *x_N* hierbei das erweitere Positionssignal über alle Abschnitte und damit über eine Umdrehung darstellt, welches hier in Rad angegeben ist. Dieses Korrektursignal kann dann in dieser Weiterbildung von den Positionskorrekturmitteln zur Korrektur des Positionssignals genutzt werden.

Weiterbildend ist vorgesehen, dass die Sensordistanz einem Viertel der Abschnittslänge entspricht, um das erste und das zweite Spurteilsignal zu erzeugen, die somit um 90° phasenverschobene sind. Besonders bevorzugt handelt es sich bei den beiden Spurteilsignalen um zwei sinusförmige Signale bei konstanter Relativbewegung der Sensormittel entlang der Maßverkörperung.

Eine Weiterbildung sieht ferner vor, dass die Positionsbestimmungsvorrichtung nichtflüchtige Speichermittel zum unmittelbaren und/oder mittelbaren Zwischenspeichern des zuletzt bestimmten Korrektursignals und somit von bestimmten Korrekturwerten umfasst. Alternativ ist im nichtflüchtigen Speicher eine Abfolge von Einzelwerten des Korrektursignals für die Vielzahl der Abschnitte und/oder des zuletzt bestimmten Periodenlängendifferenzsignals, insbesondere von einer Abfolge von Einzelwerten des Korrektursignals und/der des Periodenlängendifferenzsignals für die Vielzahl der Abschnitte hinterlegt.

Weiterbildend ist ferner vorgesehen, dass die Positionsbestimmungsvorrichtung eine Ausgabeeinheit zur direkten und/oder indirekten Ausgabe des korrigiertes Positionssignals umfasst. Die Ausgabeeinheit ist bevorzugt zur digitalen oder analogen Ausgabe des korrigierten Positionssignals ausgebildet

Zudem wird im Rahmen der vorliegenden Erfindung auch Schutz für ein Korrekturverfahren zum Korrigieren eines eine Position und/oder eine Positionsänderung eines Objekts abbildenden Positionssignals beansprucht.

Das Positionssignal wird bevorzugt durch eine Positionsbestimmungsvorrichtung erzeugt, die eine an dem Objekt festlegbare Maßverkörperung mit einer Vielzahl von Abschnitten zum Ausbilden einer Codespur umfasst. Die Vielzahl der Abschnitte sind zueinander benachbart angeordnet, um die Codespur auszubilden. Ferner umfassen die Abschnitte eine definierte und, insbesondere einheitliche, Abschnittlänge. Das erfindungsgemäße Verfahren umfasst die folgenden Verfahrensschritte:
In einem erfindungsgemäßen Verfahrensschritt erfolgt das Erzeugen eines ersten Spurteilsignals und eines zweiten Spurteilsignals mittels Sensormitteln.

Das erste und das zweite Spurteilsignal umfassen gemeinsam eine Quadrateninformation.

Die in diesem Zusammenhang eingesetzten Sensormittel umfassen eine erste Sensoreinheit zum Erzeugen des ersten Spurteilsignals und eine zweite Sensoreinheit zum Erzeugen des zweiten Spurteilsignals. Ferner ist die erste Sensoreinheit von der zweiten Sensoreinheit entlang der Codespur um eine Sensordistanz beabstandet, derart, dass bei einer Positionsänderung des Objekts und somit einer Relativbewegung zwischen der Maßverkörperung und den Sensormitteln das erste Spurteilsignal und das zweite Spurteilsignal eine durch die Codespur definierte, von der Abschnittlänge abhängige Periodenlänge und eine von Sensordistanz und Abschnittslänge abhängigen sensorbasierte Phasendifferenz aufweisen.

In einem weiteren erfindungsgemäßen Verfahrensschritt erfolgt das Erzeugen eines Positionssignals zum Abbilden der Position und/oder Positionsänderung des Objekts insbesondere mit Positionsbestimmungsmitteln;
In einem weiteren erfindungsgemäßen Verfahrensschritt erfolgt das Bestimmen eines Phasendifferenzsignals aus dem ersten Spurteilsignal und dem zweiten Spurteilsignal insbesondere mittels Periodendifferenzvergleichsmittel.

Das Phasendifferenzsignal gibt somit die Phasenverschiebung zwischen dem ersten und dem zweiten Spurteilsignal für den jeweiligen Abschnitt der Vielzahl der Abschnitte der Codespur an. Das Phasendifferenzsignal wird wesentlich durch die Sensordistanz und die Abschnittlänge bestimmt.

In einem weiteren erfindungsgemäßen Verfahrensschritt erfolgt das Bestimmen eines Periodenlängendifferenzsignals aus dem Phasendifferenzsignal insbesondere mittels der Periodendifferenzvergleichsmittel.

In einem weiteren erfindungsgemäßen Verfahrensschritt erfolgt das Bestimmen eines Korrektursignals aus dem Periodenlängendifferenzsignal insbesondere mittels Positionskorrekturmittel.

In einem weiteren erfindungsgemäßen Verfahrensschritt erfolgt das Bestimmen eines korrigierten Positionssignals aus dem Positionssignal und dem Korrektursignal insbesondere mittels der Positionskorrekturmittel.

Weiterbildend ist es erfindungsgemäß auch vorgesehen, dass das Korrekturverfahren und/oder das Bestimmen des Periodenlängendifferenzsignals (y) den folgenden Verfahrensschritt umfasst: Bestimmen der Abweichung zwischen dem Phasendifferenzsignal und einem Referenzwert der sensorbasierten Phasendifferenz insbesondere mittels der Periodendifferenzvergleichsmittel.

Schließlich wird auch Schutz beansprucht für ein Kalibrierungstool für einen Drehgeber oder einen Lineargeber, wobei das Kalibrierungstool zum Ausführen des erfindungsgemäßen Korrekturverfahrens ausgebildet ist. Das Kalibrierungstool umfasst hierfür eine Schnittstelle zum Verbinden mit dem Drehgeber oder dem Lineargeber für einen Datenaustausch. Ferner ist das Kalibrierungstool dazu eingerichtet, dass Kalibrierungsdaten für den Drehgeber oder den Lineargeber erzeugbar sind. Es wird darauf hingewiesen, dass das erfindungsgemäße Korrekturverfahren zum Erzeugen der Kalibrierungsdaten auch teilweise auf einer Recheneinheit des Kalibrierungstool ausgeführt werden kann und die bestimmten Kalibrierungsdaten über die Schnittstelle an den Drehgeber oder den Lineargeber übermittelt werden, wodurch vorteilhaft eine Kalibrierung des Gebers beispielsweise ohne den komplexen Aufbau mit einem Kalibrierungs- und/oder Referenzgeber erforderlich ist.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften des Erfindungsgegenstands durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1:: eine schematische Darstellung einer erfindungsgemäßen Positionsbestimmungsvorrichtung gemäß einer ersten bevorzugten Ausführungsform, wobei die Sensormittel vorliegend zum radialen Zusammenwirken mit der Maßverkörperung eingerichtet sind;
- Fig. 2:: eine schematische Darstellung einer erfindungsgemäßen Positionsbestimmungsvorrichtung gemäß einer zweiten bevorzugten Ausführungsform;
- Fig. 3:: eine schematische Darstellung einer erfindungsgemäßen Positionsbestimmungsvorrichtung gemäß einer weiteren bevorzugten Ausführungsform;
- Fig. 4:: eine schematische Darstellung einer erfindungsgemäßen Positionsbestimmungsvorrichtung gemäß einer weiteren bevorzugten Ausführungsform;
- Fig. 5:: eine schematische Darstellung einer erfindungsgemäßen Positionsbestimmungsvorrichtung gemäß einer weiteren bevorzugten Ausführungsform und
- Fig. 6:: eine schematische Darstellung einer erfindungsgemäßen Positionsbestimmungsvorrichtung gemäß einer weiteren bevorzugten Ausführungsform, wobei die Sensormittel vorliegend zum axialen Zusammenwirken mit den Maßverkörperung eingerichtet sind.

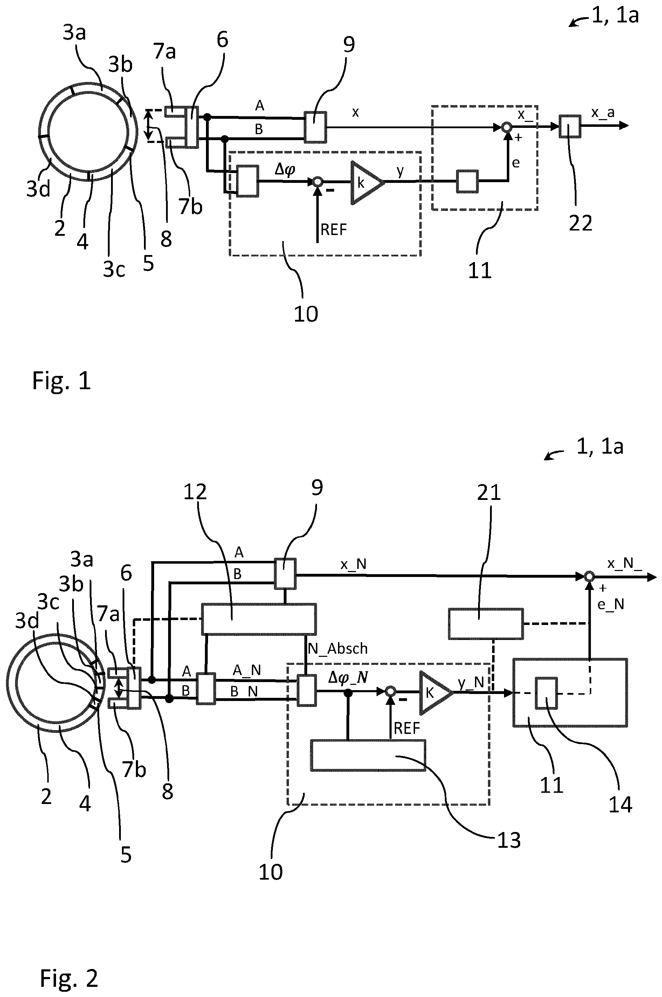

Die Fig. 1 zeigt ein schematisches Blockdiagramm einer erfindungsgemäßen Positionsbestimmungsvorrichtung 1 in der konkreten Ausführungsform eines Drehgebers 1a zum Bestimmen von Längen- und/oder Winkelpositionen eines Objekts.

Die erfindungsgemäße Positionsbestimmungsvorrichtung 1 umfasst eine als ein separates Bauteil ausgebildete Maßverkörperung 2, die eine ringförmige und/oder hohlzylindrische Ausgestaltung aufweist. Die Maßverkörperung 2 kann somit umfangsseitig einer Welle festgelegt werden. Somit wird es ermöglicht, dass mittels der erfindungsgemäßen Positionsbestimmungsvorrichtung 1 die Winkelposition der Welle und/oder die Rotationsbewegung der Welle erfasst und durch ein Positionssignal abgebildet werden kann, wobei die Welle mit dem Objekt in Wirkverbindung steht oder das Objekt ausbildet.

Die ringförmige und/oder hohlzylindrische Maßverkörperung 2 umfasst eine Vielzahl von Abschnitten 3a-d zum Ausbilden einer Codespur 4. Die Vielzahl der Abschnitte 3a-d sind zueinander benachbart innerhalb und/oder umfangsseitig der Maßverkörperung 2 angeordnet und umfassen eine vordefinierte und im vorliegenden Ausführungsbeispiel einheitliche Abschnittslänge 5. Nur ein Teil der Vielzahl der Abschnitte ist stark schematisiert grafisch dargestellt und beispielhaft mit einer Bezugsziffer versehen, vgl. 3a-d.

Die erfindungsgemäße Positionsbestimmungsvorrichtung 1 umfasst zudem Sensormittel 6, die relativ zu dem Objekt und/oder der Maßverkörperung 2 festgelegt sind und mit der Maßverkörperung 2 zum Auslesen der Codespur 4 in Wirkverbindung stehen. Die Sensormittel 6 sind im vorliegenden Fall zum radialen Zusammenwirken mit der Maßverkörperung 2 ausgebildet.

Zum Auslesen der Codespur 4 umfassen die Sensormittel 6 eine erste Sensoreinheit 7a sowie eine zweite Sensoreinheit 7b. Die erste Sensoreinheit 7a erzeugt in Abhängigkeit der Codespur 4 ein erstes Spurteilsignal A und die zweite Sensoreinheit 7b ist zum Erzeugen eines zweiten Spurteilsignals B in Abhängigkeit der Codespur 4 eingerichtet.

Entlang der Codespur 4 ist die erste Sensoreinheit 7a von der zweiten Sensoreinheit 7b um die so genannte Sensordistanz 8 beabstandet. Die Sensordistanz 8 ist ein räumlicher Abstand zwischen der ersten Sensoreinheit 7a und der zweiten Sensoreinheit 7b, der in den erzeugten Spurteilsignalen zu einer Phasenverschiebung führt. Anders ausgedrückt, das erste Spurteilsignal und das zweite Spurteilsignal umfassen eine Phasenverschiebung, die durch die räumliche Beabstandung der beiden Sensoreinheiten 7a/b, also der Sensordistanz 8 und der Abschnittslänge 5, hervorgerufen wird.

Die mittels der Sensormittel 6 auslesbare Codespur 4 definiert in den beiden Spurteilsignalen Periodenlängen, wobei die Abschnittslänge 5 des jeweiligen Abschnitts die jeweilige Periodenlänge bestimmt. Die im Rahmen der vorliegenden Erfindung bezeichnete sensorbasierte Phasenverschiebung ist wiederum von der Sensordistanz 8 und der Abschnittslänge 5 abhängig.

Bei den Spurteilsignalen A/B handelt es sich im vorliegenden Ausführungsbeispiel um sinusförmige Signale. Alternativ können die Signale insbesondere auch einen rechteckförmigen Verlauf aufweisen.

Weiter umfasst die erfindungsgemäße Positionsbestimmungsvorrichtung 1 Positionsbestimmungsmittel 9, die so ausgebildet sind, dass aus dem ersten Spurteilsignal A und dem zweiten Spurteilsignal B das Positionssignal x zum Darstellen der Winkelposition und/oder der Winkelpositionsänderung des Objekts bestimmbar ist. Das Positionssignal x_ bildet somit die Bewegung des Objekts nach. Der Verlauf des Positionssignals x_ bildet die Positionsänderung des Objekts nach.

Bevorzugt sind die Positionsbestimmungsmittel zum Ausführen einer atan2-Funktion, insbesondere von atan2(Spurteilsignal B, Spurteilsignal A), ausgebildet, wie es aus dem Stand der Technik bekannt ist. Vorteilhaft ist in diesem Zusammenhang, dass die atan2-Funktion auch über alle Quadranten definiert ist. Das Ergebnis beinhaltet also die Quadranteninformation aus den Spursignalen A und B, welche man bevorzugt zum Erweitern und/oder Periodenzählen nutzen kann, um somit ein erweitertes Positionssignal zu erzeugen.

Es wird darauf hingewiesen, dass das Positionssignal x zum Abbilden der Position und/oder der Positionsänderung des Objekts immer aus dem ersten Spurteilsignal A zusammen mit dem zweiten Spurteilsignal B erzeugt werden kann, da ein einzelnes Spurteilsignal nicht alle Quadranteninformationen enthält, weshalb beim Auswerten nur eines einzelnen Spurteilsignals A/B die Bewegungsrichtung des Objekts nicht eindeutig bestimmt werden könnte.

Ferner umfasst die erfindungsgemäße Positionsbestimmungsvorrichtung 1 Periodendifferenzvergleichsmittel 10, die zum Erzeugen eines Periodenlängendifferenzsignals y eingerichtet und/oder ausgebildet sind.

Die erfindungsgemäßen Periodendifferenzvergleichsmittel 10 erzeugen zunächst aus dem ersten Spurteilsignal A und dem zweiten Spurteilsignal B ein Phasendifferenzsignal Δ*φ.* Das Phasendifferenzsignal Δ*φ* beschreibt die Phasenverschiebung zwischen dem ersten und dem zweiten Spurteilsignal A/B. Aus dieser Differenz lässt sich erfindungsgemäß das Periodenlängendifferenzsignal y bestimmen.

Konkret sind die Periodendifferenzvergleichsmittel 10 im vorliegenden Ausführungsbeispiel so eingerichtet, dass eine Abweichung zwischen dem Phasendifferenzsignal Δ*φ* und einem Referenzwert REF der sensorbasierten Phasendifferenz berechnet wird, der dann über einen Faktor k skaliert wird, um in Abhängigkeit der idealen Abschnittslänge und der Sensordistanz 8, bei dem die Phasenverschiebung der zwei Spurteilsingale zueinander 90° ergibt, das erfindungsgemäße Periodenlängendifferenzsignal y zu bestimmen.

Der Referenzwert REF der sensorbasierten Phasendifferenz ist über die sensorbasierte Phasenverschiebung definiert und ermöglicht, dass der Einfluss, insbesondere eines statischen Offsets, der sensorbasierten Phasenverschiebung im Periodenlängendifferenzsignal y eliminiert werden kann.

Bevorzugt ist der Skalierungsfaktor k konstant und wird durch die Sensormittel bestimmt und/oder definiert. In vorteilhafter Weise kann durch die Skalierung mit dem Faktor k die Abweichung der Phasendifferenz auf die ideale Abschnittslänge bezogen werden, bei dem die Phasenverschiebung der zwei Spurteilsignale zueinander 90° ergibt.

Besonders bevorzugt kann es auch vorgesehen sein, dass der Faktor k dynamisch bestimmt und/oder leicht angepasst wird, um insbesondere sensorspezifische Nichtlinearitäten und/oder bestimmte Eigenschaften der Sensormittel, insbesondere bei großen Abständen oder starken Verkippungen, zu berücksichtigen.

Ganz besonders bevorzugt wird für den Faktor k eine 4 oder eine 8 oder eine 0,8 hinterlegt.

Weiterhin bevorzugt ist der Faktor k vorzeichenbehaftet, insbesondere negativ, um eine Invertierung zu ermöglichen.

Weiterhin bevorzugt wird der Faktor k experimentell ermittelt, insbesondere bei Sensormitteln deren Aufbau nicht hinreichend genau bekannt ist. Dazu kann, insbesondere als Laboraufbau, die erfindungsgemäße Positionsbestimmungsvorrichtung aufgebaut werden und mit einem Referenzgeber gekoppelt werden. Die Positionsausgabe des Referenzgebers kann von der Positionsausgabe der erfindungsgemäßen Positionsbestimmungsvorrichtung abgezogen werden und der Faktor k innerhalb der erfindungsgemäßen Positionsbestimmungsvorrichtung so gewählt werden, dass diese Differenz möglichst klein wird.

Bei einem idealen Systemaufbau entspricht das Periodenlängendifferenzsignal y somit null. In Realität, beispielsweise aufgrund von Fertigungstoleranzen in der Maßverkörperung 4 und/oder bei Toleranzen bezüglich des Drehzentrums der Maßverkörperung 2 entsteht ein Phasenfehler, der nun durch das erfindungsgemäße Periodenlängendifferenzsignal y darstellbar ist.

Schließlich umfasst die erfindungsgemäße Positionsbestimmungsvorrichtung 1 auch erfindungsgemäße Positionskorrekturmittel 11. Die Positionskorrekturmittel 11 sind so eingerichtet, dass ein Korrektursignal e in Abhängigkeit des Periodenlängendifferenzsignal y bestimmt werden kann und dass das mittels den erfindungsgemäßen Positionsbestimmungsmitteln 9 erzeugte Positionssignal x durch das Korrektursignal e in ein korrigiertes Positionssignal x_, insbesondere durch die Addition des Korrektursignals e mit dem Positionssignal x, überführbar ist.

Weiterhin umfasst das dargestellte Ausführungsbeispiel eine Ausgabeeinheit 22, die zur Ausgabe des korrigierten Positionssignals x_ ausgebildet ist. Im vorliegenden Ausführungsbeispiel handelt es sich bei der Ausgabeeinheit 22 um eine Schnittstelle, die ein digitales Ausgangssignal x_a für eine externe Anwendung zur Verfügung stellt. Bevorzugt wird das Ausgangssignal x_a innerhalb einer weiteren Signalverarbeitungseinheit innerhalb oder außerhalb des Drehgebers ausgewertet und weiterverarbeitet.

Die Fig. 2 zeigt ein Blockdiagramm der erfindungsgemäßen Positionsbestimmungsvorrichtung 1 gemäß eines weiteren Ausführungsbeispiels.

In dieser bevorzugten Ausgestaltung umfasst die Positionsbestimmungsvorrichtung 1 eine Zusatzsensoreinheit 12, die so ausgebildet ist, dass dem Positionssignal x eine Positionsinformation hinsichtlich des jeweiligen Abschnitts 3a/3b/3c/3d zugeordnet werden kann. Somit wird ein erweitertes Positionssignal x_N bereitgestellt.

Konkret bedeutet dies, dass die Zusatzsensoreinheit 12 so ausgebildet ist, dass den jeweiligen Signalperioden der beiden Spurteilsignale A/B jeweils der entsprechende Abschnitt der Vielzahl der Abschnitte eindeutig zugeordnet werden kann. Alle Abschnitte 3a-d umfassen eine Positionsinformation, beispielsweise ein Zählwert und/oder eine Abschnitts-ID, um eine eindeutige Zuordnung und/oder Identifikation zu erzielen, die von der Zusatzsensoreinheit 12 erfasst und/oder ausgelesen werden kann. Die Sensormittel 6 und/oder die erste und die zweite Sensoreinheit 7a/7b erzeugen somit ein Positionssignal x, das über die Zusatzsensoreinheit 12 um die Abschnitts-ID erweiterbar ist, um ein erweitertes Positionssignal x_N bereitzustellen.

Ferner sind auch die Periodendifferenzvergleichsmittel 10 derart ausgebildet, dass das Periodenlängendifferenzsignal y und/oder das Phasendifferenzsignal Δ*φ* für jeden Abschnitt 3a/3b/3c/3d der Vielzahl der Abschnitte 3a-d abschnittsbezogen und/oder individuell berechnet werden kann. Ein abschnittsbezogenes Phasendifferenzsignal Δφ(x_N) und/oder ein abschnittsbezogenes Periodenlängendifferenzsignal y(x_N) lässt sich somit vorteilhaft erzeugen, wobei im Rahmen der vorliegenden Erfindung Δφ(x_N) als Δφ_N und y(x_N) als y_N bezeichnet wird.

Hierfür greifen die Periodendifferenzvergleichsmittel 10 auf erweiterte Spurteilsignale A(x_N)/B(x_N) zurück, die mittels der Zusatzsensoreinheit 12 generiert wurden und die die Positionsinformation und/oder die Abschnitts-ID zusätzlich umfassen, wobei im Rahmen der vorliegenden Erfindung A(x_N) als A_N und B(x_N) als B_N bezeichnet wird.

Die erweiterten Spurteilsignale A(x_N)/B(x_N) ermöglichen die Zuordnung zwischen der jeweiligen Signalperiode zu einem Abschnitt. Vorteilhaft kann somit ein Abgleich und/oder eine Zuordnung zwischen einerseits dem erweiterten Positionssignal x_N, bevorzugt einem bestimmten zeitlichen Verlauf des Positionssignals x_N, besonders bevorzugt einer Gruppe und/oder Abfolge von Einzelwerten des Positionssignals, und andererseits dem jeweiligen Abschnitt erfolgen. Dies ermöglicht dann auch eine unmittelbare Zuordnung zwischen dem Periodenlängendifferenzsignal y(x_N) und dem erweiterten Positionssignal x_N.

Zudem umfasst das Ausführungsbeispiel gemäß der Fig. 2 Rechenmittel 13, um den Referenzwert REF zu berechnen und dynamisch anzupassen. Die Rechenmittel 13 sind derart eingerichtet, dass ein arithmetischer Mittelwert des Phasendifferenzsignals Δ*φ* über die Vielzahl der Abschnitte der Maßverkörperung 2 und/oder für eine Vollumdrehung der Welle bestimmt werden kann. Die Rechenmittel 13 nutzen für die Kalkulation das abschnittsbezogene Phasendifferenzsignal Δ*φ*(*x_N*).

Weiterhin umfassen die Positionskorrekturmittel 11 des in der Fig. 2 dargestellten Ausführungsbeispiels Integrationsmittel 14 zum Bestimmen eines abschnittsbezogenen Korrektursignals e(x_N), vorliegend auch als e_N bezeichnet.

Die Integrationsmittel 14 sind derart ausgebildet, dass das abschnittsbezogene Periodenlängendifferenzsignal y(x_N) durch eine diskrete Integration, vorliegend in Form einer kumulierten Summe, über sämtliche Abschnitte 3a-d der Maßverkörperung 2 und/oder eine Vollumdrehung der Welle in das abschnittsbezogene Korrektursignal e(x_N) überführbar ist.

Für das erweiterte Positionssignal x_N kann somit in Abhängigkeit des jeweiligen Abschnitts 3a/3b/3c/3d das abschnittsbezogene Korrektursignal e(x_N) genutzt werden, um das korrigierte Ausgangssignal x_N_ oder x_(x_N_) in Abhängigkeit des jeweiligen Abschnitts 3a/3b/3c/3d zu erzeugen. Erfindungsgemäß vorteilhaft lässt sich damit eine abschnittsbezogene Korrektur des Positionssignals x_N und somit ein abschnittsbezogenes, korrigiertes Positionssignal x_N_ erzeugen.

Zudem umfasst die Positionsbestimmungsvorrichtung 1 in der vorliegenden Ausführungsvariante Speichermittel 21, die nichtflüchtig ausgebildet sind. Somit sind die Daten auf Dauer gespeichert, auch wenn keine Versorgungsspannung an der erfindungsgemäßen Positionsbestimmungsvorrichtung 1 anliegt. Vorteilhaft lassen sich in den Speichermitteln 21 das abschnittsbezogene Korrektursignal e(x_N) ablegen, um nach einem Neustart unmittelbar auf in der Vergangenheit berechnete Korrekturwerte zuzugreifen. Neben dem Korrektursignal kann es auch sinnvoll sein, weitere interne Größen, wie etwa das Periodenlängendifferenzsignal abzulegen. Vorteilhaft kann somit unmittelbar nach einem Neustart das Positionssignal mittels der zwischengespeicherten Werten korrigiert werden.

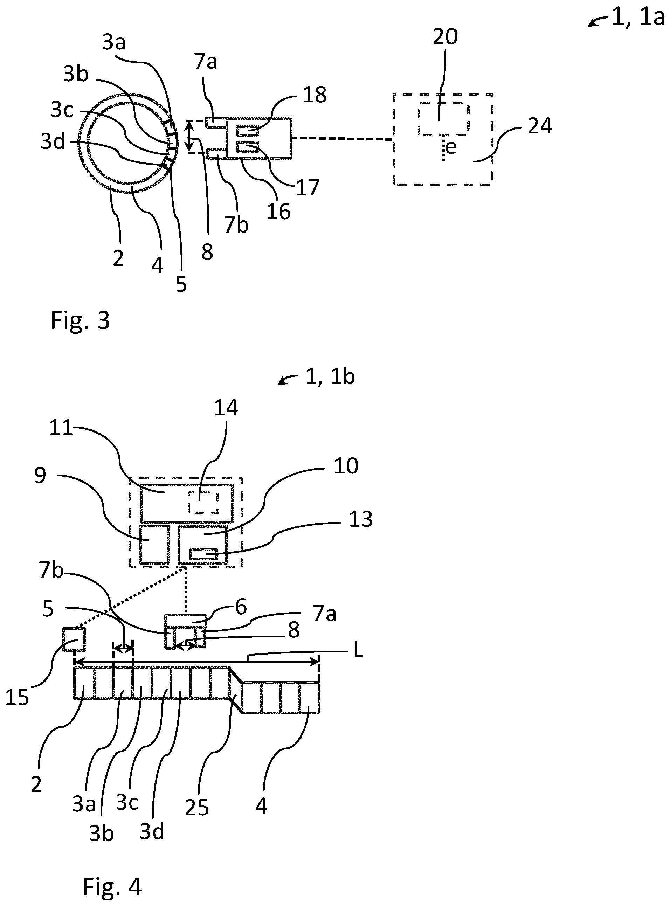

Die Fig. 3 zeigt die erfindungsgemäße Positionsbestimmungsvorrichtung 1 gemäß einem weiteren bevorzugten Ausführungsbeispiel. In diesem Ausführungsbeispiel ist die erste Sensoreinheit 7a und die zweite Sensoreinheit 7b in einer gemeinsamen Gehäuseeinheit 16 angeordnet, wobei diese Gehäuseeinheit 16 auch die Sensordistanz 8 definiert und/oder bildet. Ferner ist die Gehäuseeinheit 16 so ausgebildet, dass in der dargestellten Montageposition der Sensormittel 6 die Phasenverschiebung zwischen dem ersten Spurteilsignal A und dem zweiten Spurteilsignal B im Wesentlichen 90° beträgt.

In der Gehäuseeinheit 16 sind zudem Hilfsspannungsversorgungsmittel 17 vorgesehen, die die erste Sensoreinheit 7a sowie die zweite Sensoreinheit 7b mit einer Hilfsspannung, im vorliegenden Fall einer Gleichspannung von 5V, versorgt. Ferner teilen sich die erste und die zweite Sensoreinheit 7a/b auch eine Auswerteeinheit 18, die ebenfalls in der gemeinsamen Gehäuseeinheit 16 angeordnet ist.

In dieser Auswertereinheit 18 sind elektronische Baugruppen für die Signalaufbereitung der Signale der Sensoreinheiten 7a/b vorgesehen. Dies sind jeweils eine Analog-zu-Digital-Umsetzeinheit sowie Verstärkerbaugruppen um die Signale für die Analog-zu-Digital-Umsetzeinheit aufzubereiten. Weiterhin sind auch Taktgeber umfasst, die die Analog-zu-Digital-Umsetzung in zeitlich äquidistant Abständen anstoßen. Somit können die Spurteilsignale A/B der Sensoreinheiten 7a/b als digitale Signale, also zeit- und wertdiskret bereitgestellt werden.

Die weiteren Komponenten der erfindungsgemäßen Positionsbestimmungsvorrichtung 1 sind nunmehr im Block 24 umfasst, wobei zur Vermeidung von Wiederholungen auf das Ausführungsbeispiel gemäß der Fig. 2 verwiesen wird.

Jedoch ist es vorliegend zusätzlich vorgesehen, dass die Positionsbestimmungsvorrichtung 1 bevorzugte Servicemittel 20 umfasst.

Die Servicemittel 20 sind derart eingerichtet, dass der Abstand zwischen den Sensormitteln 6 und der Maßverkörperung 2 über die Phasenverschiebung zwischen dem ersten und dem zweiten Spurteilsignal A/B bestimmt wird. Möglich wird dies über einen Vergleich der erfassten Phasenverschiebung mit der durch die Sensordistanz 8 und die Abschnittslänge 5 hervorgerufenen Phasenverschiebung.

Die Servicemittel 20 sind zudem zum Erzeugen eines Statussignals ausgebildet. Das Statussignal übermittelt einer Montageperson, insbesondere einem Kunden, eine Rückmeldung zur Relativposition von Maßverkörperung 2 und den Sensormitteln 6. Ferner lässt sich durch die Servicemittel 20 unmittelbar ein Korrektursignal e erzeugen, da sich aus dem Verlauf des Abstands zwischen den Sensormitteln 6 und der Maßverkörperung 2 die Exzentrizität der Maßverkörperung bestimmen lässt. Aus dieser Exzentrizität lässt sich dann wiederum das Korrektursignal e berechnen. wodurch eine aufwändige Kalibrierung mittels eines Referenzgebers nach einer Inbetriebnahme und/oder Fertigung vollständig entfallen kann. Vorteilhaft lassen sich somit Kosten bei der Herstellung der Positionsbestimmungsvorrichtung einsparen.

Die Fig. 4 zeigt nun eine weitere bevorzugte Ausführungsform der erfindungsgemäßen Positionsbestimmungsvorrichtung 1. In dieser bevorzugten Ausführungsvariante ist die Positionsbestimmungsvorrichtung 1 als ein Lineargeber 1b ausgebildet.

Die Maßverkörperung 2, die mehrere, unmittelbar benachbarte Abschnitte 3a-d zum Ausbilden der Codespur 4 entlang ihrer Gesamterstreckung L aufweist, ist im Wesentlichen geradlinig ausgebildet. Es wird darauf hingewiesen, dass nur ein Teil der Vielzahl der Abschnitte mit einer Bezugsziffer versehen sind.

Die Soll-Magnetisierung der Maßverkörperung 2 sieht vor, dass sämtliche Abschnitte 3a-d eine einheitliche Abschnittslänge 5 aufweisen. Die Abschnitte 3a-d wurde durch einen magnetischen Schreibvorgang derart magnetisiert, dass jeder Abschnitt 3a/b/c/d wenigstens einen N-Pol und einen P-Pol umfasst.

Ferner umfasst die Maßverkörperung 2 eine mechanische Abweichung in der Maßverkörperung, weshalb eine einzelne Abschnittslänge zu kurz ausfällt. Der fehlerhafte Abschnitt 25 ist vorliegend figürlich durch einen winkligen Bereich stark schematisiert dargestellt.

Der fehlerhafte Abschnitt 25 führt zu einer zusätzlichen Phasenverschiebung zwischen dem ersten Spurteilsignal A, das mittels der ersten Sensoreinheit 7a erzeugbar ist, und dem zweiten Spurteilsignal B, das mittels der zweiten Sensoreinheit 7b erzeugbar ist.

Das mittels der erfindungsgemäßen Periodendifferenzvergleichsmittel 10 erzeugte Phasendifferenzsignal Δφ wird daher im Bereich des fehlerhaften Abschnitts 25 eine Signalunregelmäßigkeit aufweisen, die zu einer Vergrößerung oder Verringerung der sensorbasierten Phasendifferenz aufgrund der Sensordistanz 8 zwischen der ersten Sensoreinheit 7a und der zweiten Sensoreinheit 7b und der Abschnittslänge 5 führt. Anders ausgedrückt, im Bereich des fehlerhaften Abschnitts 25 zeigt das Phasendifferenzsignal Δφ einen Signalverlauf, insbesondere einen oder mehrere Einzelwerte, der sich vom restlichen Signalverlauf des Phasendifferenzsignals Δφ unterscheidet.

Somit wird auch das erfindungsgemäße Periodenlängendifferenzsignal y im Bereich des fehlerhaften Abschnitts 25 einen sich von Null unterscheidenden und/oder sich hinsichtlich des restlichen Bereichs abweichenden Verlauf aufweisen.

Schließlich umfasst die dargestellte Ausführungsvariante der erfindungsgemäßen Positionsbestimmungsvorrichtung 1 noch Positionskorrekturmittel 11. Die erfindungsgemäßen Positionskorrekturmittel 11 umfassen zum Berechnen des Korrektursignals e Integrationsmittel 14. Die Integrationsmittel 14 sind dahingehend eingerichtet, dass das Korrektursignal e oder ein Zwischensignal durch das Integrieren des Periodenlängendifferenzsignals y über alle Abschnitte 3a-d der Maßverkörperung 2 bestimmbar ist

Schließlich umfasst die dargestellte Ausführungsvariante der erfindungsgemäßen Positionsbestimmungsvorrichtung 1 noch eine Messvorrichtung 15, die die Gesamterstreckung L der Maßverkörperung 2. Die Messvorrichtung 15 ist bevorzugt als ein Laserdistanzsensor ausgebildet, um somit die Gesamterstreckung L der Maßverkörperung 2 zu bestimmen.

Innerhalb der Periodendifferenzvergleichsmittel 10 kann der Referenzwert REF dann mittels Rechenmitteln 13 mit Hilfe des arithmetischen Mittelwertes des Phasendifferenzsignals Δ*φ* über sämtliche Abschnitte der Maßverkörperung 2 für den Messbereich der Referenzlänge minus der Referenzlänge L geteilt durch die Anzahl der Abschnitte für den Messbereich der Referenzlänge geteilt durch die Abschnittslänge multipliziert mit 90° ermittelt werden.

Der Referenzwert REF kann so einerseits als Abgleichwert bei der Inbetriebnahme und andererseits mit den Rechenmitteln und der zusätzlichen Messvorrichtung im Betrieb fortlaufend ermittelt werden.

Erfindungsgemäß vorteilhaft lässt sich somit der Einfluss des Magnetisierungsfehlers aus dem Positionssignal entfernen.

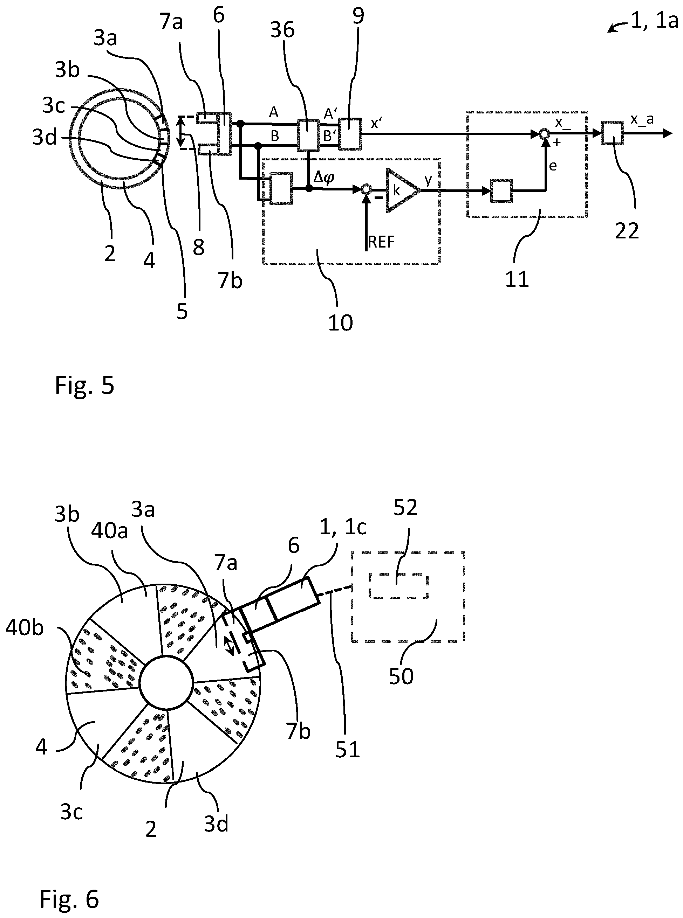

Die Fig. 5 zeigt ein weiteres bevorzugtes Ausführungsbeispiel der erfindungsgemäßen Positionsbestimmungsvorrichtung 1.

Der Aufbau dieses Ausführungsbeispiels entspricht dem Ausführungsbeispiel gemäß der Fig. 1, weshalb zur Vermeidung von Wiederholungen auf den entsprechenden Beschreibungsteil verwiesen wird. Im Folgenden werden somit nur auf die Unterschiede und/oder Besonderheiten des Ausführungsbeispiels gemäß der Fig. 5 eingegangen.

Im Wesentlichen unterscheidet sich das Ausführungsbeispiel gemäß der Fig. 5 durch zusätzliche Phasenkorrekturmittel 36.

Die Phasenkorrekturmittel 36 sind eingangsseitig mit dem ersten Spurteilsignal A und dem zweiten Spurteilsignal B verbunden.

Zudem wird das Phasendifferenzsignal Δ*φ,* das mittels der Periodendifferenzvergleichsmittel 10 berechnet wird, den Phasenkorrekturmitteln 36 eingangsseitig zugeführt. Ausgangsseitig bestimmen die Phasenkorrekturmittel ein korrigiertes erstes Spurteilsignal A' und ein korrigiertes zweites Spurteilsignal B'.

Die korrigierten Spurteilsignale A'/B' wurden gemäß der aus dem Stand der Technik bekannten Phasenkorrektur so korrigiert, dass diese möglichst genau um 90°, phasenverschoben sind. Vorteilhaft kann bei dieser Ausführungsform damit eine anderweitige Störgröße im Positionssignal x kompensiert werden.

Mit anderen Worten, die Phasenkorrekturmittel 36 haben die Aufgabe, den Phasenfehler - also eine Abweichung der Phasendifferenz von beispielsweise 90° - so auszuregeln, dass die beiden Spurteilsignale A/B anschließend gerade möglichst genau um 90° zueinander phasenverschoben sind.

Es wird darauf hingewiesen, dass im Rahmen der vorliegenden Erfindung die Phasenkorrekturmittel 36 nicht vor den erfindungsgemäßen Periodendifferenzvergleichsmitteln 10 angewendet werden dürfen, da sonst im Hinblick auf die vorliegende Erfindung wesentliche Informationen verloren gehen.

Aus den beiden korrigierten Spurteilsignalen A'/B' lässt sich dann ein weiters Positionssignal x' berechnen, in dem der weitere Fehlertyp korrigiert wird.

Das weitere Positionssignal x' lässt sich dann mit dem Korrektursignal e verrechnen, um im Ergebnis das korrigierte Positionssignal x_ zu erhalten.

Alternativ ist es weiterbildend auch vorgesehen, dass die Phasenkorrekturmittel 36 nicht zum Durchführen einer klassischen Phasenregelung eingerichtet sind, sondern dass aus den bereits vorhandenen Phasendifferenzsignal Δ*φ* ein zusätzliches Korrektursignal mit der doppelten Frequenz der beiden Spursignale erzeugt wird, dass dann entsprechend für eine zusätzliche Korrektur genutzt werden kann.

Die Fig. 6 zeigt noch eine erfindungsgemäße Positionsbestimmungsvorrichtung 1 gemäß einer weiteren bevorzugten Ausführungsform, wobei die Sensormittel 6 vorliegend zum axialen Zusammenwirken mit der Maßverkörperung 2 ausgebildet sind.

Bei der Maßverkörperung 2 handelt es sich um eine optische Codescheibe, wobei die Vielzahl der Abschnitte 3a-d transparente und intransparente Abschnitte umfasst. Die Positionsbestimmungsvorrichtung 1 ist somit als optischer Drehgeber 1c ausgebildet.

Die Maßverkörperung 2 ist kreisringförmig und die Vielzahl der Abschnitte 3a-d als Kreisringsektoren 40a/b ausgebildet. Die Kreisringsektoren 40a/b sind in der dargestellten Draufsicht gleichmäßig verteilt um den Mittelpunkt der Maßverkörperung 2 angeordnet, wobei ein transparenter 40a und ein intransparenter Kreisringsektor 40b der Codespur 4 einer Periodenlänge in den beiden Spurteilsignalen A/B entspricht und somit einen einzelnen Abschnitt ausbildet.

Der optische Drehgeber 1c ist über eine Schnittstelle 51 mit einem Kalibrierungstool 50 signaltechnisch verbunden. Durch das Kalibrierungstool 50 können Daten für die Kalibrierung des Drehgebers 1c erzeugt und über die Schnittstelle 51 an den Drehgeber 1c übermittelt werden. Hierfür ist das Kalibrierungstool zum Zusammenwirken mit dem Drehgeber 1c eingerichtet, wobei wenigstens die folgenden Schritte auf einer vom Kalibrierungstool umfassten Recheneinheit 52 oder auf dem Drehgeber 1c ausführbar sind:
Erzeugen des ersten Spurteilsignals A und des zweiten Spurteilsignals B mit den Sensormitteln 6;
Erzeugen eines Positionssignals x zum Abbilden der Position und/oder der Positionsänderung des Objekts, das mit der optischen Codescheibe mechanisch gekoppelt ist;
Bestimmen eines Phasendifferenzsignals Δ*φ* aus dem ersten und dem zweiten Spurteilsignal A/B zum Abbilden der Differenz der Phase des ersten Spurteilsignals A von der Phase des zweiten Spurteilsignals B;
Bestimmen eines Periodenlängendifferenzsignals y aus dem Phasendifferenzsignal Δ*φ*;
Bestimmen eines Korrektursignals e aus dem Periodenlängendifferenzsignal y.
Das Korrektursignal e stellt somit die Daten zur Kalibrierung des Drehgebers 1c dar, die über die Schnittstelle 51 an den Drehgeber übermittelt werden.

Es wird darauf hingewiesen, dass bei diesem axialen Zusammenwirken der Sensormittel 6 mit der Maßverkörperung 2 auch bei einer exzentrischen Montage der Maßverkörperung 2 in Bezug auf die Drehachse der Antriebswelle das Korrektursignal e erzeugt werden kann, welches, insbesondere innerhalb des Drehgebers 1c, mit dem Positionssignal x, das aufgrund der exzentrischen Montage fehlerbehaftet ist, verrechnet werden kann und damit ein korrigiertes Positionssignal x_ bereitgestellt werden kann.

## Patentansprüche

1. Positionsbestimmungsvorrichtung (1, 1a, 1b, 1c) zum Bestimmen von Längenund/oder Winkelpositionen eines Objekts, aufweisend
- eine an dem Objekt festlegbare Maßverkörperung (2) mit einer Vielzahl von Abschnitten (3a-d) zum Ausbilden einer Codespur (4), wobei die Vielzahl der Abschnitte (3a-d) entlang der Codespur (4) benachbart angeordnet sind und jeweils eine definierte Abschnittslänge (5) aufweisen;
- relativ zu dem Objekt und/oder der Maßverkörperung (2) festlegbare Sensormittel (6) zum Auslesen der Codespur (4), wobei die Sensormittel (6) eine erste Sensoreinheit (7a) zum Erzeugen eines ersten Spurteilsignals (A) und eine zweite Sensoreinheit (7b) zum Erzeugen eines zweiten Spurteilsignals (B) umfassen, welche zusammen eine Quadranteninformation bereitstellen, und wobei die erste Sensoreinheit (7a) von der zweiten Sensoreinheit (7b) entlang der Codespur (4) um eine Sensordistanz (8) beabstandet ist, derart, dass bei einer Positionsänderung des Objekts und somit einer Relativbewegung zwischen der Maßverkörperung (2) und den Sensormitteln (6) das erste Spurteilsignal und das zweite Spurteilsignal einerseits jeweils eine durch die Codespur (4) definierte, von der Abschnittslänge (5) abhängige, im Wesentlichen gleiche Periodenlänge und andererseits eine von der Sensordistanz (8) und der Abschnittslänge (5) abhängigen sensorbasierten Phasendifferenz aufweisen;
- Positionsbestimmungsmittel (9), die so ausgebildet sind, dass aus dem ersten und dem zweiten Spurteilsignal (A/B) ein durch die Codespur (4) definiertes Positionssignal (x) zur Abbildung der Position und/oder Positionsänderung des Objekts erzeugbar ist,
**gekennzeichnet durch**
- Periodendifferenzvergleichsmittel (10), die ein Periodenlängendifferenzsignal (y) bestimmen und die so ausgebildet sind, dass aus dem ersten und dem zweiten Spurteilsignal (A/B) ein Phasendifferenzsignal (Δ*φ*) zum Abbilden der Differenz der Phase des ersten Spurteilsignals (A) von der Phase des zweiten Spurteilsignals (B) bestimmbar ist, um aus dieser Differenz das Periodenlängendifferenzsignal (y) zu bestimmen sowie
- Positionskorrekturmittel (11), die so ausgebildet sind, dass ein Korrektursignal (e) in Abhängigkeit des Periodenlängendifferenzsignals (y) bestimmbar ist, und dass das Positionssignals (x) **durch** das Korrektursignal (e) in ein korrigiertes Positionssignal (x_) überführbar ist.

2. Positionsbestimmungsvorrichtung nach Anspruch 1,
**dadurch gekennzeichnet,**
**dass** die Periodendifferenzvergleichsmittel (10) so ausgebildet sind, dass eine Abweichung zwischen dem Phasendifferenzsignal (Δ*φ*) und einem Referenzwert der sensorbasierten Phasendifferenz (REF) bestimmbar ist und dass aus dieser Abweichung in Abhängigkeit der Sensordistanz (8) das Periodenlängendifferenzsignal (y) ermittelbar ist.

3. Positionsbestimmungsvorrichtung nach Anspruch 1 oder 2,
**dadurch gekennzeichnet,**
**dass** die Positionsbestimmungsmittel (9) zum Bestimmen eines erweiterten Positionssignals (x_N) ausgebildet sind, derart, dass das Positionssignal (x) um eine Positionsinformation, insbesondere um einen Zählwert, erweiterbar ist, um dem Positionssignal (x), insbesondere einem Einzelwert des Positionssignals, dem jeweiligen Abschnitt (3a/3b/3c/3d) der Vielzahl der Abschnitte (3a-d) der Maßverkörperung (2) zuzuordnen und als das erweiterte Positionssignal (x_N) bereitzustellen.

4. Positionsbestimmungsvorrichtung nach Anspruch 1 oder 2,
**gekennzeichnet durch** eine von der Positionsbestimmungsvorrichtung (9) umfasste Zusatzsensoreinheit (12) zum Erfassen einer Positionsinformation zum Bestimmen eines erweiterten Positionssignals (x_N), wobei die Zusatzsensoreinheit (12) zum Zusammenwirken mit den Positionsbestimmungsmitteln (9) und/oder der Maßverkörperung (2) eingerichtet ist und so ausgebildet ist, dass dem Positionssignal (x), insbesondere einem Einzelwert des Positionssignals, dem jeweiligen Abschnitt (3a/3b/3c/3d) der Vielzahl der Abschnitte (3a-d) zuordenbar und als das erweiterte Positionssignal (x_N) bereitstellbar ist.

5. Positionsbestimmungsvorrichtung nach Anspruch 3 oder 4,
**dadurch gekennzeichnet,**
**dass** die Periodendifferenzvergleichsmittel (10) so ausgebildet sind, dass das Periodenlängendifferenzsignal (y) und/oder das Phasendifferenzsignal (Δ*φ*) für jeden Abschnitt (3a/3b/3c/3d) der Vielzahl der Abschnitte (3a-d) gesondert und/oder Abschnittsbezogen berechenbar ist und somit dem erweiterten Positionssignal (x_N), insbesondere mehreren Einzelwerten des Positionssignals, in Abhängigkeit des Abschnitts (3a-d) zuordenbar ist.

6. Positionsbestimmungsvorrichtung nach einem der vorhergehenden Ansprüche, **dadurch gekennzeichnet,**
**dass** die Periodendifferenzvergleichsmittel (10) Rechenmittel (13) zum Bestimmen des Referenzwerts (REF) umfassen, wobei die Rechenmittel (13) so ausgebildet sind, dass der Referenzwert (REF) durch einen Mittelwert, bevorzugt einen arithmetischen Mittelwert, des Phasendifferenzsignals (Δ*φ*) insbesondere über alle Abschnitte der Vielzahl der Abschnitte der Codespur (4), bestimmbar ist und/oder dass der Referenzwert (REF) unter Einbeziehung einer Referenzlänge (L) ermittelbar ist, wobei die Referenzlänge (L) insbesondere mittels einer zusätzlichen Messvorrichtung (15), bevorzugt einem Distanzsensor, bestimmbar ist, wobei die Referenzlänge (L) die Gesamterstreckung der Maßverkörperung (2) angibt.

7. Positionsbestimmungsvorrichtung nach einem der vorhergehenden Ansprüche, **dadurch gekennzeichnet,**
**dass** die Positionskorrekturmittel (11) Integrationsmittel (14) zum Bestimmen des Korrektursignals (e) umfassen, die so ausgebildet sind, dass das Periodenlängendifferenzsignal (y) durch eine diskrete Integration, bevorzugt durch eine kumulierte Summe, insbesondere über alle Abschnitte (3a-d) der Vielzahl der Abschnitte (3a-d) der Codespur (4), in das Korrektursignal (e) überführbar ist.

8. Positionsbestimmungsvorrichtung nach einem der vorhergehenden Ansprüche, **dadurch gekennzeichnet,**
**dass** die erste Sensoreinheit (7a) und die zweite Sensoreinheit (7b) in einer von der Positionsbestimmungsvorrichtung (1) umfassten gemeinsamen Gehäuseeinheit (16) angeordnet sind, wobei die Gehäuseeinheit (16) bevorzugt die Sensordistanz (8) definiert und/oder dass die erste und die zweite Sensoreinheit (7a/b) weiter bevorzugt gemeinsame Hilfsversorgungsmittel (17), insbesondere eine Referenzspannungsquelle, und/oder eine Auswerteeinheit (18), umfassen.

9. Positionsbestimmungsvorrichtung nach einem der vorhergehenden Ansprüche, **dadurch gekennzeichnet,**
**dass** die Sensormittel (6) zum axialen Zusammenwirken mit der Maßverkörperung (2) ausgebildet sind, wobei die Maßverkörperung (2) kreisflächenförmig und die Abschnitte (3a-d) als Kreissektoren oder die Maßverkörperung (2) kreisringförmig und die Abschnitte (3a-d) als Kreisringsektoren (40a/b), insbesondere gleichmäßig verteilt, ausgebildet sind oder
**dass** die Sensormittel (6) zum radialen Zusammenwirken mit der Maßverkörperung (2) ausgebildet sind, wobei die Maßverkörperung (2) in einer Mantelfläche eines Zylinders oder Hohlzylinders und die Vielzahl der Abschnitte (3a-d), insbesondere gleichmäßig verteilt, umfangsseitig und/oder entlang des Umfangs der Mantelfläche angeordnet sind oder
**dass** die Sensormittel (6) zum linearen Zusammenwirken mit der Maßverkörperung (2) ausgebildet sind, wobei die Maßverkörperung (2) linear und/oder entlang eines linearen Weges ausgebildet ist und die Vielzahl der Abschnitte (3a-d), insbesondere gleichmäßig verteilt, entlang dieses Weges angeordnet sind.

10. Positionsbestimmungsvorrichtung nach einem der vorhergehenden Ansprüche, **gekennzeichnet durch** von der Positionsbestimmungsvorrichtung (1) umfasste Servicemittel (20), die so ausgebildet sind, dass aus dem Periodenlängendifferenzsignal (y) der Abstand zwischen den Sensormitteln (6) und der Maßverkörperung (2) bestimmbar und mittel- und/oder unmittelbar ausgebbar ist, wobei die Servicemittel (20) insbesondere zum Erzeugen eines den aktiven Betrieb der Positionsbestimmungsvorrichtung (1) freigebenden Statussignals ausgebildet sind, derart, dass das Statussignal nur dann erzeugbar ist, wenn der ermittelte Abstand innerhalb vordefinierter Grenzbereiche liegt und wobei der Abstand zwischen den Sensormitteln (6) und der Maßverkörperung (2) sich insbesondere im Wesentlichen entlang eines Radius der Maßverkörperung (2) erstreckt.

11. Positionsbestimmungsvorrichtung nach einem der vorhergehenden Ansprüche, **dadurch gekennzeichnet,**
**dass** die Positionsbestimmungsvorrichtung (1) eine Ausgabeeinheit (22) zur direkten und/oder indirekten Ausgabe des korrigiertes Positionssignals (x_) an eine externe Anwendung umfasst.

12. Positionsbestimmungsvorrichtung nach Anspruch 4
**gekennzeichnet durch** von der Positionsbestimmungsvorrichtung (1) umfasste nichtflüchtige Speichermittel (21) zum unmittelbaren und/oder mittelbaren Speichern des zuletzt bestimmten Korrektursignals (3), bevorzugt einer Abfolge von Einzelwerten des Korrektursignals für die Vielzahl der Abschnitte (3a-d) oder insbesondere des Korrektursignals und/oder einer Abfolge von Einzelwerten des zuletzt bestimmten Periodenlängendifferenzsignals (y), insbesondere einer Abfolge von Einzelwerten des Periodenlängendifferenzsignals für die Vielzahl der Abschnitte (3a-d).

13. Korrekturverfahren zum Korrigieren eines eine Position und/oder eine Positionsänderung eines Objekts abbildenden Positionssignals (x) einer Positionsbestimmungsvorrichtung (1/1a/1b/1c), die insbesondere nach einem der vorgenannten Ansprüche ausgebildet ist, wobei die Positionsbestimmungsvorrichtung (1) eine an dem Objekt festlegbare Maßverkörperung (2) mit einer Vielzahl von Abschnitten (3a-d) zum Ausbilden einer Codespur (4) umfasst, wobei die Vielzahl der Abschnitte (3a-d) entlang der Codespur (4) benachbart angeordnet sind und jeweils eine definierte und, insbesondere einheitliche, Abschnittslänge (5) aufweisen, umfassend die folgenden Verfahrensschritte:
- Erzeugen eines ersten Spurteilsignals (A) und eines zweiten Spurteilsignals (B), die zusammen eine Quadrateninformation umfassen mit Sensormitteln (6), wobei die Sensormittel (6) eine erste Sensoreinheit (7a) zum Erzeugen des ersten Spurteilsignals (A) und eine zweite Sensoreinheit (7b) zum Erzeugen des zweiten Spurteilsignals (B) umfassen, wobei die erste Sensoreinheit (7a) von der zweiten Sensoreinheit (7b) entlang der Codespur (4) um eine Sensordistanz (8) beabstandet ist, derart, dass bei einer Positionsänderung des Objekts und somit einer Relativbewegung zwischen der Maßverkörperung (2) und den Sensormitteln (6) das erste Spurteilsignal (A) und das zweite Spurteilsignal (B) eine durch die Codespur (4) definierte, von der Abschnittslänge (5) abhängige, im Wesentlichen gleiche Periodenlänge und eine von der Sensordistanz (8) und der Abschnittslänge (5) abhängigen sensorbasierten Phasendifferenz aufweisen;
- Erzeugen eines Positionssignals (x) zum Abbilden der Position und/oder Positionsänderung des Objekts insbesondere mit Positionsbestimmungsmitteln (9);
- Bestimmen eines Phasendifferenzsignal (Δ*φ*) aus dem ersten und dem zweiten Spurteilsignal (A/B) zum Abbilden der Differenz der Phase des ersten Spurteilsignals (A) von der Phase des zweiten Spurteilsignals (B), insbesondere mittels Periodendifferenzvergleichsmittel (10);
- Bestimmen eines Periodenlängendifferenzsignals (y) aus dem Phasendifferenzsignal (Δ*φ*)*,* insbesondere mittels der Periodendifferenzvergleichsmittel (10);
- Bestimmen eines Korrektursignals (e) aus dem Periodenlängendifferenzsignal (y), insbesondere mittels Positionskorrekturmittel (11);
- Bestimmen eines korrigierten Positionssignals (x_) aus dem Positionssignal (x) und dem Korrektursignal (e), insbesondere mittels der Positionskorrekturmittel (11).

14. Korrekturverfahren nach Anspruch 13,
**dadurch gekennzeichnet, dass** das Periodenlängendifferenzsignal (y) durch das Bestimmen der Abweichung zwischen dem Phasendifferenzsignal (Δ*φ*) und einem Referenzwert der sensorbasierten Phasendifferenz (REF), insbesondere mittels der Periodendifferenzvergleichsmittel (10), bestimmt wird.

15. Kalibrierungstool (50) für einen Drehgeber oder einen Lineargeber, wobei das Kalibrierungstool zum Ausführen des erfindungsgemäßen Korrekturverfahrens nach Anspruch 13 oder 14 ausgebildet ist, umfassend eine Schnittstelle (51) zum Verbinden mit dem Drehgeber oder dem Lineargeber für einen Datenaustausch, wobei durch das Korrektursignal (e) Daten zur Kalibrierung des Drehgebers oder des Lineargebers erzeugbar sind.

## Claims

1. Position determination device (1, 1a, 1b, 1c) for determining longitudinal and/or angular positions of an object, comprising
- a material measure (2) which can be fixed to the object and has a plurality of portions (3a-d) for forming a code track (4), wherein the plurality of portions (3a-d) are arranged so as to be adjacent along the code track (4) and each have a defined portion length (5);
- sensor means (6) for reading out the code track (4), which can be fixed in place relative to the object and/or the material measure (2), wherein the sensor means (6) comprise a first sensor unit (7a) for generating a first track partial signal (A) and a second sensor unit (7b) for generating a second track partial signal (B), which together provide quadrant information, and wherein the first sensor unit (7a) is spaced from the second sensor unit (7b) along the code track (4) by a sensor distance (8) in such a way that in the event of a change in position of the object and thus a relative movement between the material measure (2) and the sensor means (6), the first track partial signal and the second track partial signal each have a substantially equal period length defined by the code track (4) and dependent on the portion length (5), and a sensor-based phase difference dependent on the sensor distance (8) and the portion length (5);
- position determination means (9) which are designed such that a position signal (x), defined by the code track (4), for mapping the position and/or change in position of the object can be generated from the first and the second track partial signal (A/B),
**characterized by**
- period difference comparison means (10) which determine a period length difference signal (y) and are designed such that a phase difference signal (Δ*φ*) for mapping the difference between the phase of the first track partial signal (A) and the phase of the second track partial signal (B) can be determined from the first and the second track partial signal (A/B) in order to determine the period length difference signal (y) from this difference, and
- position correction means (11) which are designed such that a correction signal (e) can be determined on the basis of the period length difference signal (y), and such that the position signal (x) can be converted into a corrected position signal (x_) by the correction signal (e).

2. Position determination device according to claim 1,
**characterized**
**in that** the period difference comparison means (10) are designed such that a deviation between the phase difference signal (Δ*φ*) and a reference value of the sensor-based phase difference (REF) can be determined and such that the period length difference signal (y) can be ascertained from this deviation on the basis of the sensor distance (8).

3. Position determination device according to claim 1 or 2,
**characterized**
**in that** the position determination means (9) are designed to determine an enhanced position signal (x_N) in such a way that the position signal (x) can be enhanced with position information, in particular by a count value, in order to assign the position signal (x), in particular a single value of the position signal, the corresponding portion (3a/3b/3c/3d) of the plurality of portions (3a-d) of the material measure (2) and to provide it as the enhanced position signal (x_N).

4. Position determination device according to claim 1 or 2,
**characterized by** an additional sensor unit (12), which the position determination device (9) comprises, for acquiring position information for determining an enhanced position signal (x_N), wherein the additional sensor unit (12) is configured to cooperate with the position determination means (9) and/or the material measure (2) and is designed such that the position signal (x), in particular a single value of the position signal, can be assigned the corresponding portion (3a/3b/3c/3d) of the plurality of portions (3a-d) and can be provided as the enhanced position signal (x_N).

5. Position determination device according to claim 3 or 4,
**characterized**
**in that** the period difference comparison means (10) are designed such that the period length difference signal (y) and/or the phase difference signal (Δ*φ*) can be calculated separately for each portion (3a/3b/3c/3d) of the plurality of portions (3a-d) and/or in a manner related to the portions and can thus be assigned to the enhanced position signal (x_N), in particular to a plurality of individual values of the position signal, depending on the portion (3a-d).

6. Position determination device according to any of the preceding claims, **characterized**
**in that** the period difference comparison means (10) comprise computational means (13) for determining the reference value (REF), wherein the computational means (13) are designed such that the reference value (REF) can be determined by a mean, preferably an arithmetic mean, of the phase difference signal (Δ*φ*), in particular over all of the portions of the plurality of portions of the code track (4), and/or
**in that** the reference value (REF) can be ascertained by incorporating a reference length (L), wherein the reference length (L) can be determined in particular by means of an additional measuring device (15), preferably a distance sensor, wherein the reference length (L) indicates the total extent of the material measure (2).

7. Position determination device according to any of the preceding claims, **characterized**
**in that** the position correction means (11) comprise integration means (14) for determining the correction signal (e) which are designed such that the period length difference signal (y) can be converted into the correction signal (e) by discrete integration, preferably by a cumulative sum, in particular over all of the portions (3a-d) of the plurality of portions (3a-d) of the code track (4).

8. Position determination device according to any of the preceding claims, **characterized**
**in that** the first sensor unit (7a) and the second sensor unit (7b) are arranged in a common housing unit (16) which the position determination device (1) comprises, wherein the housing unit (16) preferably defines the sensor distance (8), and/or in that the first and the second sensor unit (7a/b) further preferably comprise common auxiliary supply means (17), in particular a reference voltage source, and/or an evaluation unit (18).

9. Position determination device according to any of the preceding claims, **characterized**
**in that** the sensor means (6) are designed to cooperate axially with the material measure (2), wherein the material measure (2) is discoidal and the portions (3a-d) are in the form of circular sectors or the material measure (2) is annular and the portions (3a-d) are in the form of in particular evenly distributed annular sectors (40a/b), or
**in that** the sensor means (6) are designed to cooperate radially with the material measure (2), wherein the material measure (2) is arranged in a lateral surface of a cylinder or hollow cylinder and the plurality of portions (3a-d) are arranged circumferentially and/or along the circumference of the lateral surface, in particular in an evenly distributed manner, or
**in that** the sensor means (6) are designed to cooperate linearly with the material measure (2), wherein the material measure (2) is linear and/or is formed along a linear path and the plurality of portions (3a-d) are arranged along this path, in particular in an evenly distributed manner.

10. Position determination device according to any of the preceding claims, **characterized by** service means (20) which the position determination device (1) comprises and which are designed such that the spacing between the sensor means (6) and the material measure (2) can be determined from the period length difference signal (y) and can be output directly and/or indirectly, wherein the service means (20) are designed in particular to generate a status signal enabling the active operation of the position determination device (1), in such a way that the status signal can only be generated if the ascertained spacing is within predefined limit ranges, and wherein the spacing between the sensor means (6) and the material measure (2) extends in particular substantially along a radius of the material measure (2).

11. Position determination device according to any of the preceding claims, **characterized**
**in that** the position determination device (1) comprises an output unit (22) for directly and/or indirectly outputting the corrected position signal (x_) to an external application.

12. Position determination device according to claim 4,
**characterized by** non-volatile storage means (21), which the position determination device (1) comprises, for directly and/or indirectly storing the most recently determined correction signal (3), preferably a sequence of individual values of the correction signal for the plurality of portions (3a-d) or in particular the correction signal and/or a sequence of individual values of the most recently determined period length difference signal (y), in particular a sequence of individual values of the period length difference signal for the plurality of portions (3a-d).

13. Correction method for correcting a position signal (x), which maps a position and/or a change in position of an object, of a position determination device (1/1a/1b/1c) which is designed in particular according to any of the preceding claims, wherein the position determination device (1) comprises a material measure (2) which can be fixed to the object and has a plurality of portions (3a-d) for forming a code track (4), wherein the plurality of portions (3a-d) are arranged so as to be adjacent along the code track (4) and each have a defined and, in particular, uniform portion length (5), comprising the following method steps:
- generating, using sensor means (6), a first track partial signal (A) and a second track partial signal (B), which together comprise quadratic information, wherein the sensor means (6) comprise a first sensor unit (7a) for generating the first track partial signal (A) and a second sensor unit (7b) for generating the second track partial signal (B), wherein the first sensor unit (7a) is spaced from the second sensor unit (7b) along the code track (4) by a sensor distance (8) in such a way that in the event of a change in position of the object and thus a relative movement between the material measure (2) and the sensor means (6), the first track partial signal (A) and the second track partial signal (B) have a substantially equal period length defined by the code track (4) and dependent on the portion length (5), and a sensor-based phase difference dependent on the sensor distance (8) and the portion length (5);
- generating, in particular using position determination means (9), a position signal (x) for mapping the position and/or change in position of the object;
- determining, in particular by means of period difference comparison means (10), a phase difference signal (Δ*φ*) from the first and the second track partial signals (A/B) for mapping the difference between the phase of the first track partial signal (A) and the phase of the second track partial signal (B);
- determining, in particular by means of the period difference comparison means (10), a period length difference signal (y) from the phase difference signal (Δ*φ*);
- determining, in particular by means of position correction means (11), a correction signal (e) from the period length difference signal (y);
- determining, in particular by means of the position correction means (11), a corrected position signal (x_) from the position signal (x) and the correction signal (e).

14. Correction method according to claim 13,
**characterized in that** the period length difference signal (y) is determined by determining the deviation between the phase difference signal (Δ*φ*) and a reference value of the sensor-based phase difference (REF), in particular by means of the period difference comparison means (10).

15. Calibration tool (50) for a rotary encoder or a linear encoder, wherein the calibration tool is designed to carry out the correction method according to the invention according to claim 13 or 14, comprising an interface (51) for connection to the rotary encoder or the linear encoder for data exchange, wherein data for calibrating the rotary encoder or the linear encoder can be generated by the correction signal (e).

## Revendications

1. Dispositif de détermination de position (1, 1a, 1b, 1c) permettant de déterminer les positions longitudinales et/ou angulaires d'un objet, présentant
- un étalon de mesure (2) pouvant être fixé à l'objet et comportant une pluralité de sections (3a-d) destinées à former une piste de code (4), dans lequel la pluralité de sections (3a-d) sont disposées de manière à être adjacentes le long de la piste de code (4) et présentent respectivement une longueur de section (5) définie ;
- des moyens formant capteurs (6) pouvant être fixés par rapport à l'objet et/ou à l'étalon de mesure (2) et permettant de lire la piste de code (4), dans lequel les moyens formant capteurs (6) comprennent une première unité de capteur (7a) permettant de générer un premier signal de partie de piste (A) et une seconde unité de capteur (7b) permettant de générer un second signal de partie de piste (B), lesquelles fournissent ensemble des informations quadratiques, et dans lequel la première unité de capteur (7a) est espacée de la seconde unité de capteur (7b) le long de la piste de code (4) d'une distance entre capteurs (8), de telle sorte que, lors d'un changement de position de l'objet et donc d'un mouvement relatif entre l'étalon de mesure (2) et les moyens formant capteurs (6), le premier signal de partie de piste et le second signal de partie de piste présentent, d'une part, respectivement une longueur de période sensiblement identique, définie par la piste de code (4) et dépendant de la longueur de section (5), et d'autre part une différence de phases basée sur les capteurs et dépendant de la distance entre capteurs (8) et de la longueur de section (5) ;
- des moyens de détermination de position (9) qui sont configurés de telle sorte qu'à partir du premier et du second signal de partie de piste (A/B), un signal de position (x) défini par la piste de code (4) peut être généré pour représenter la position et/ou le changement de position de l'objet, **caractérisé par**
- des moyens de comparaison de différence de période (10) qui déterminent un signal de différence de longueur de période (y) et qui sont configurés de telle sorte qu'à partir du premier et du second signal de partie de piste (A/B), un signal de différence de phases (Δ*φ*) permettant de représenter la différence entre la phase du premier signal de partie de piste (A) et la phase du second signal de partie de piste (B) peut être déterminé, afin de déterminer, à partir de ladite différence, le signal de différence de longueur de période (y), et
- des moyens de correction de position (11) qui sont configurés de telle sorte qu'un signal de correction (e) peut être déterminé en fonction du signal de différence de longueur de période (y), et que le signal de position (x) peut être transformé, au moyen du signal de correction (e), en un signal de position corrigé (x_).

2. Dispositif de détermination de position selon la revendication 1, **caractérisé en ce**
**que** les moyens de comparaison de différence de période (10) sont configurés de sorte qu'un écart entre le signal de différence de phases (Δ*φ*) et une valeur de référence de la différence de phases (REF) basée sur les capteurs peut être déterminé et que, à partir dudit écart, le signal de différence de longueur de période (y) peut être défini en fonction de la distance entre capteurs (8).

3. Dispositif de détermination de position selon la revendication 1 ou 2, **caractérisé en ce**
**que** les moyens de détermination de position (9) sont configurés pour déterminer un signal de position étendu (x_N), de telle sorte que le signal de position (x) peut être étendu d'une information de position, en particulier d'une valeur de comptage, afin d'associer le signal de position (x), en particulier une valeur individuelle du signal de position, à la section (3a/3b/3c/3d) respective parmi la pluralité de sections (3a-d) de l'étalon de mesure (2), et de le fournir en tant que signal de position étendu (x_N).

4. Dispositif de détermination de position selon la revendication 1 ou 2, **caractérisé par** une unité de capteur supplémentaire (12) comprise par le dispositif de détermination de position (9) et permettant de détecter des informations de position afin de déterminer un signal de position étendu (x_N), dans lequel l'unité de capteur supplémentaire (12) est réalisée pour coopérer avec les moyens de détermination de position (9) et/ou l'étalon de mesure (2) et est configurée de sorte que le signal de position (x), en particulier une valeur individuelle du signal de position, peut être associé à la section (3a/3b/3c/3d) respective parmi la pluralité de sections (3a-d) et peut être fourni en tant que signal de position étendu (x_N).

5. Dispositif de détermination de position selon la revendication 3 ou 4, **caractérisé en ce**
**que** les moyens de comparaison de différence de période (10) sont configurés de sorte que le signal de différence de longueur de période (y) et/ou le signal de différence de phases (Δ*φ*) pour chaque section (3a/3b/3c/3d) parmi la pluralité de sections (3a-d) peuvent être calculés séparément et/ou en fonction de la section, et peuvent ainsi être associés au signal de position étendu (x_N), en particulier à plusieurs valeurs individuelles du signal de position, en fonction de la section (3a-d).

6. Dispositif de détermination de position selon l'une des revendications précédentes, **caractérisé en ce**
**que** les moyens de comparaison de différence de période (10) comprennent des moyens de calcul (13) permettant de déterminer la valeur de référence (REF), dans lequel les moyens de calcul (13) sont configurés de sorte que la valeur de référence (REF) peut être déterminée au moyen d'une valeur moyenne, de préférence d'une valeur moyenne arithmétique, du signal de différence de phases (Δ*φ*), en particulier sur l'ensemble des sections de la pluralité de sections de la piste de code (4), et/ou
**que** la valeur de référence (REF) peut être définie en tenant compte d'une longueur de référence (L), dans lequel la longueur de référence (L) peut être déterminée en particulier à l'aide d'un dispositif de mesure supplémentaire (15), de préférence d'un capteur de distance, dans lequel la longueur de référence (L) indique l'étendue totale de l'étalon de mesure (2).

7. Dispositif de détermination de position selon l'une des revendications précédentes, **caractérisé en ce**
**que** les moyens de correction de position (11) comprennent des moyens d'intégration (14) permettant de déterminer le signal de correction (e), lesquels sont configurés de sorte que le signal de différence de longueur de période (y) peut être transformé en signal de correction (e) par une intégration discrète, de préférence par une somme cumulée, en particulier sur l'ensemble des sections (3a-d) de la pluralité de sections (3a-d) de la piste de code (4).

8. Dispositif de détermination de position selon l'une des revendications précédentes, **caractérisé en ce**
**que** la première unité de capteur (7a) et la seconde unité de capteur (7b) sont disposées dans une unité de boîtier (16) commune comprise dans le dispositif de détermination de position (1), dans lequel l'unité de boîtier (16) définit de préférence la distance entre capteurs (8) et/ou que la première et la seconde unité de capteur (7a/b) comprennent plus préférablement des moyens d'alimentation auxiliaires communs (17), en particulier une source de tension de référence, et/ou une unité d'évaluation (18).

9. Dispositif de détermination de position selon l'une des revendications précédentes, **caractérisé en ce**
**que** les moyens formant capteurs (6) sont configurés pour coopérer axialement avec l'étalon de mesure (2), dans lequel l'étalon de mesure (2) est conçu sous forme de surface circulaire et les sections (3a-d) sont conçues sous forme de secteurs de cercle, ou l'étalon de mesure (2) est conçu sous forme d'anneau circulaire et les sections (3a-d) sont conçues sous forme de secteurs d'anneau circulaire (40a/b), en particulier sont réparties de manière uniforme, ou
**que** les moyens formant capteurs (6) sont configurés pour coopérer radialement avec l'étalon de mesure (2), dans lequel l'étalon de mesure (2) est disposé dans une surface d'enveloppe d'un cylindre ou d'un cylindre creux et la pluralité de sections (3a-d) sont disposées sur la circonférence et/ou le long de la circonférence de la surface d'enveloppe, en particulier sont réparties de manière régulière, ou
**que** les moyens formant capteurs (6) sont configurés pour coopérer de manière linéaire avec l'étalon de mesure (2), dans lequel l'étalon de mesure (2) est conçu de manière linéaire et/ou le long d'un trajet linéaire, et la pluralité de sections (3a-d) sont disposées, en particulier sont réparties de manière uniforme, le long dudit trajet.

10. Dispositif de détermination de position selon l'une des revendications précédentes, **caractérisé par** des moyens de service (20) compris par le dispositif de détermination de position (1), lesquels sont configurés de sorte que, à partir du signal de différence de longueur de période (y), la distance entre les moyens formant capteurs (6) et l'étalon de mesure (2) peut être déterminée et transmise de manière directe et/ou indirecte, dans lequel les moyens de service (20) sont en particulier configurés pour générer un signal d'état déclenchant le fonctionnement actif du dispositif de détermination de position (1), de telle sorte que le signal d'état ne peut être généré que si la distance définie se situe dans des plages limites prédéfinies, et dans lequel la distance entre les moyens formant capteurs (6) et l'étalon de mesure (2) s'étend en particulier sensiblement le long d'un rayon de l'étalon de mesure (2).

11. Dispositif de détermination de position selon l'une des revendications précédentes, **caractérisé en ce**
**que** le dispositif de détermination de position (1) comprend une unité de sortie (22) permettant de délivrer en sortie, de manière directe et/ou indirecte, le signal de position corrigé (x_) à une application externe.

12. Dispositif de détermination de position selon la revendication 4
**caractérisé par** des moyens formant mémoire non volatile (21) compris par le dispositif de détermination de position (1) et permettant de mémoriser de manière directe et/ou indirecte le dernier signal de correction (3) déterminé, de préférence une séquence de valeurs individuelles du signal de correction pour la pluralité de sections (3a-d) ou, en particulier, le signal de correction et/ou une séquence de valeurs individuelles du dernier signal de différence de longueur de période (y) déterminé, en particulier une séquence de valeurs individuelles du signal de différence de longueur de période pour la pluralité de sections (3a-d).

13. Procédé de correction permettant de corriger un signal de position (x), lequel représente une position et/ou un changement de position d'un objet, d'un dispositif de détermination de position (1/1a/1b/1c), lequel dispositif est en particulier conçu selon l'une des revendications précédentes, dans lequel le dispositif de détermination de position (1) comprend un étalon de mesure (2) pouvant être fixé à l'objet et comportant une pluralité de sections (3a-d) permettant de former une piste de code (4), dans lequel la pluralité de sections (3a-d) sont disposées de manière à être adjacentes le long de la piste de code (4) et présentent respectivement une longueur de section (5) définie et en particulier uniforme, comprenant les étapes de procédé suivantes :
- génération d'un premier signal de partie de piste (A) et d'un second signal de partie de piste (B), lesquels comprennent ensemble des informations quadratiques, avec des moyens formant capteurs (6), dans lequel les moyens formant capteurs (6) comprennent une première unité de capteur (7a) permettant de générer le premier signal de partie de piste (A) et une seconde unité de capteur (7b) permettant de générer le second signal de partie de piste (B), dans lequel la première unité de capteur (7a) est espacée de la seconde unité de capteur (7b) le long de la piste de code (4) d'une distance entre capteurs (8), de telle sorte que, lors d'un changement de position de l'objet et donc d'un mouvement relatif entre l'étalon de mesure (2) et les moyens formant capteurs (6), le premier signal de partie de piste (A) et le second signal de partie de piste (B) présentent une longueur de période sensiblement identique, définie par la piste de code (4) et dépendant de la longueur de section (5), et une différence de phases basée sur les capteurs et dépendant de la distance entre capteurs (8) et de la longueur de section (5) ;
- génération d'un signal de position (x) permettant de représenter la position et/ou le changement de position de l'objet, en particulier avec des moyens de détermination de position (9) ;
- détermination d'un signal de différence de phases (Δ*φ*) à partir du premier et du second signal de partie de piste (A/B) afin de représenter la différence entre la phase du premier signal de partie de piste (A) et la phase du second signal de partie de piste (B), en particulier à l'aide de moyens de comparaison de différence de période (10) ;
- détermination d'un signal de différence de longueur de période (y) à partir du signal de différence de phases (Δ*φ*), en particulier à l'aide des moyens de comparaison de différence de période (10) ;
- détermination d'un signal de correction (e) à partir du signal de différence de longueur de période (y), en particulier à l'aide de moyens de correction de position (11) ;
- détermination d'un signal de position corrigé (x_) à partir du signal de position (x) et du signal de correction (e), en particulier à l'aide des moyens de correction de position (11).

14. Procédé de correction selon la revendication 13,
**caractérisé en ce que** le signal de différence de longueur de période (y) est déterminé par la détermination de l'écart entre le signal de différence de phases (Δ*φ*) et une valeur de référence de la différence de phases (REF) basée sur les capteurs, en particulier au moyen des moyens de comparaison de différence de période (10).

15. Outil d'étalonnage (50) pour un codeur rotatif ou un codeur linéaire, dans lequel l'outil d'étalonnage est configuré pour mettre en œuvre le procédé de correction selon l'invention selon la revendication 13 ou 14, comprenant une interface (51) destinée à la connexion avec le codeur rotatif ou le codeur linéaire pour un échange de données, dans lequel des données pour l'étalonnage du codeur rotatif ou du codeur linéaire peuvent être générées par le signal de correction (e).
